# EUROPEAN PATENT APPLICATION

(11) **EP 3 547 610 A1**
(43) Date of publication of application: **02.10.2019**
(21) Application number: 19162110.1
(22) Date of filing: 12.03.2019
(51) Int. Cl.: H04L 12/18

(54) **APPARATUS, SYSTEM, AND METHOD FOR ASSISTING SHARING OF RESOURCE, AND COMMUNICATION TERMINAL**

(30) Priority: 26.03.2018 JP 2018058706; 07.03.2019 JP 2019041523
(71) Applicant: Ricoh Company, Ltd., Tokyo 143-8555 (JP)
(72) Inventor: KAGAWA, Masaaki, Tokyo, 143-8555 (JP)
(74) Representative: SSM Sandmair

(57) **Abstract**

An apparatus (6), system (1), and method for assisting sharing of resources among a plurality of users, each of which: calculates a first time period before an end time of a current scheduled time period for using a resource (X) is reached, the first time period being a period of time from a reference time of the current scheduled time period for using the resource (X) to a start time of a next scheduled time period for using the resource (X); and when the first time period is equal to or greater than a first predetermined time period, transmits, to a communication terminal (2) used by a user who currently uses the resource (X), information indicating that the current scheduled time period for using the resource (X) is extendable.

## Description

### BACKGROUND

### Technical Field

The present invention relates to an apparatus, system, and method for assisting sharing of a resource, and carrier means.

### Description of the Related Art

There are some resources that are used among a plurality of users. For example, in case of a conference room being such resource, a user previously makes a reservation to use the conference room, by registering a start time and an end time for using such conference room. The recent system is able to send a notification to the user who is using the conference room when the end time reached or a few minutes before the end time reaches, for example, as described in JP 2001-292266.

The user may sometimes want to extend reservation to continue using the conference room. In such case, the user usually uses his or her personal computer (PC) to check if the conference room will be available for a certain time period, before the user is able to make decisions on whether to extend the meeting.

### SUMMARY

Example embodiments of the present invention include an apparatus, system, and method for assisting sharing of resources among a plurality of users, each of which: calculates a first time period before an end time of a current scheduled time period for using a resource is reached, the first time period being a period of time from a reference time of the current scheduled time period for using the resource to a start time of a next scheduled time period for using the resource; and when the first time period is equal to or greater than a first predetermined time period, transmits, to a communication terminal used by a user who currently uses the resource, information indicating that the current scheduled time period for using the resource is extendable.

Example embodiments of the present invention include carrier means, such as a recording medium that stores a control program for causing a computer system to perform the method for assisting sharing of resources among a plurality of users.

According to one or more embodiments, information on availability of the resource that is currently used can be easily obtained.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram illustrating an overview of a sharing system according to an embodiment;
FIG. 2 is a schematic block diagram illustrating a hardware configuration of an electronic whiteboard, according to an embodiment;
FIG. 3 is a schematic block diagram illustrating a hardware configuration of a videoconference terminal, according to an embodiment;
FIG. 4 is a schematic block diagram illustrating a hardware configuration of a car navigation system, according to an embodiment;
FIG. 5 is a schematic block diagram illustrating a hardware configuration of a computer, such as a personal computer (PC), and a server, according to an embodiment;
FIG. 6 is a schematic block diagram illustrating a functional configuration of a part of the sharing system illustrated in FIG. 1, according to an embodiment;
FIG. 7A is a conceptual diagram illustrating a user authentication management table, according to an embodiment;
FIG. 7B is a conceptual diagram illustrating an access management table, according to an embodiment;
FIG. 7C is a conceptual diagram illustrating a schedule management table, according to an embodiment;
FIG. 8A is a conceptual diagram illustrating a user authentication management table, according to an embodiment;
FIG. 8B is a conceptual diagram illustrating a user management table, according to an embodiment;
FIG. 8C is a conceptual diagram illustrating a resource management table, according to an embodiment;
FIG. 9A is a conceptual diagram illustrating a resource reservation management table, according to an embodiment;
FIG. 9B is a conceptual diagram illustrating an event management table, according to an embodiment;
FIG. 9C is a conceptual diagram illustrating a server authentication management table, according to an embodiment;
FIG. 10 is a sequence diagram illustrating operation of registering schedule, according to an embodiment;
FIG. 11 is an illustration of an example sign-in screen;
FIG. 12 is an illustration of an example schedule input screen;
FIG. 13 is a sequence diagram illustrating operation of controlling processing to start an event, according to an embodiment;
FIG. 14 is an illustration of an example resource reservation list screen;
FIG. 15 is an illustration for explaining a use scenario of the electronic whiteboard, according to an embodiment;
FIG. 16 is a sequence diagram illustrating operation of reporting availability, according to an embodiment;
FIG. 17 is a flowchart illustrating operation of determining availability of a currently-used resource, and one or more resources other than the currently-used resource, according to an embodiment;
FIG. 18 is a flowchart illustrating operation of determining availability of a user organizing a currently-held event, and one or more users who are participating in the event, according to an embodiment;
FIG. 19 is an illustration of an example screen including information on availability, displayed by a communication terminal;
FIG. 20 is an illustration of an example screen including information on availability, displayed by a communication terminal; and
FIG. 21 is an illustration of an example schedule input screen;

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring to the drawings, a system for sharing one or more resources ("sharing system") is described according to one or more embodiments.

### <Overview of system configuration>

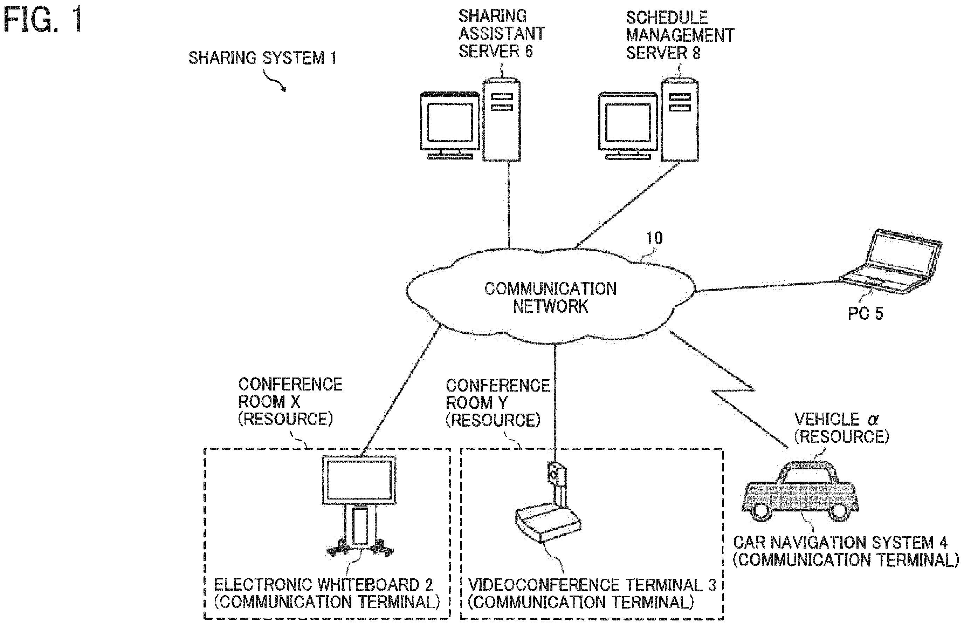

First, an overview of a configuration of a sharing system 1 is described. FIG. 1 is a schematic diagram illustrating an overview of the sharing system 1 according to one or more embodiments.

As illustrated in FIG. 1, the sharing system 1 of the embodiment includes an electronic whiteboard 2, a videoconference terminal 3, a car navigation system 4, a personal computer (PC) 5, a sharing assistant server 6, and a schedule management server 8.

The electronic whiteboard 2, videoconference terminal 3, car navigation system 4, PC 5, sharing assistant server 6, and schedule management server 8 are communicable with one another via a communication network 10. The communication network 10 is implemented by the Internet, mobile communication network, local area network (LAN), etc. The communication network 10 may include, in addition to a wired network, a wireless network in compliance with such as 3rd Generation (3G), Worldwide Interoperability for Microwave Access (WiMAX), Long Term Evolution (LTE), etc.

In this example, the electronic whiteboard 2 is provided in a conference room X. The videoconference terminal 3 is provided in a conference room Y. The car navigation system 4 is provided in a vehicle α. In this case, the vehicle α is a vehicle shared among a plurality of users, such as a vehicle used for car sharing. Further, the vehicle could be any means capable of transporting the human-being from one location to another location. Examples of vehicle include, but not limited to, cars, motorcycles, bicycles, and wheelchairs.

Further, in this disclosure, a resource may be shared among a plurality of users, such that any user is able to reserve any resource. Accordingly, the resource can be a target for reservation by each user.

Examples of the resource include, but not limited to, any object, service, space or place (room, or a part of room), information (data), which can be shared among a plurality of users. Further, the user may be an individual person, a group of persons, or an organization such as a company. In the sharing system 1 illustrated in FIG. 1, the conference room X, the conference room Y, and the vehicle α are examples of a resource shared among a plurality of users.

Examples of information as a resource include, but not limited to, information on an account assigned to the user, with the user being more than one individual person. For example, the organization may only be assigned with one account that allows any user in the organization to use a specific service provided on the Internet. In such case, information on such account, such as a user name and a password, is assumed to be a resource that can be shared among a plurality of users in that organization. In one example, the teleconference or videoconference service may be provided via the Internet, which may be provided to a user who has logged in with a specific account.

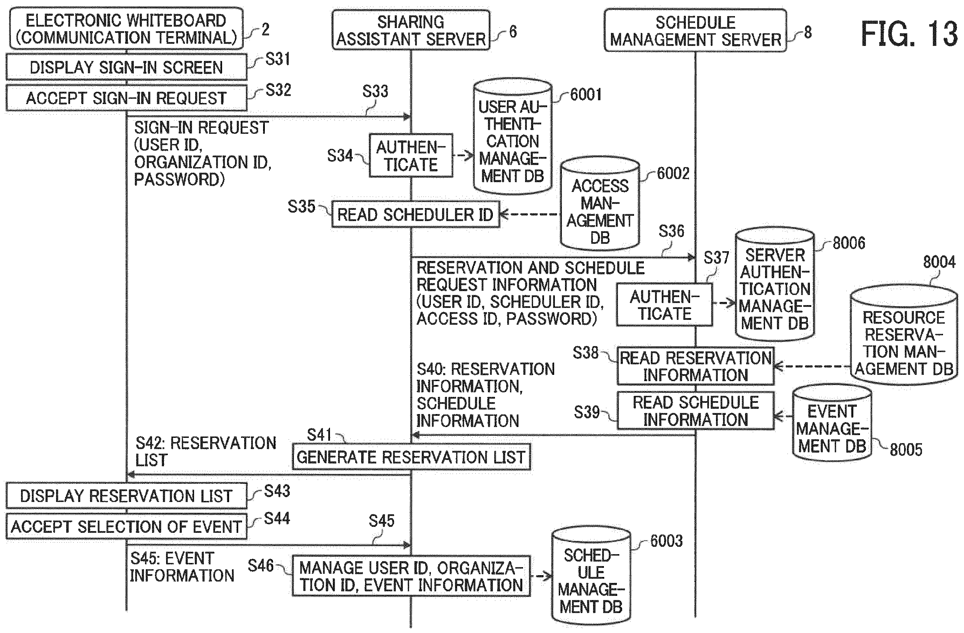

The electronic whiteboard 2, videoconference terminal 3, and car navigation system 4, are each an example of a communication terminal. The communication terminal is any device capable of communicating with such as the sharing assistant server 6 and the schedule management server 8, and providing information obtained from the server to the user of the resource. For example, as described below referring to S32 of FIG. 13, the communication terminal is any terminal that the user uses to sign in to use services provided by the sharing system 1. Further, in case the resource is any conference room, the communication terminal may be any device provided in the conference room, such that information on the communication terminal may be associated with the conference room as a resource. Examples of the communication terminal provided in the vehicle α may not only include the car navigation system 4, but also a smart phone or a smart watch installed with such as a car navigation application.

The PC 5 is an example of an information processing apparatus. Specifically, the PC 5 registers, to the schedule management server 8, reservations made by each user to use each resource, or any event scheduled by each user. Examples of the event include, but not limited to, a conference, meeting, gathering, counseling, presentation, driving, ride, and transporting.

The sharing assistant server 6, which is implemented by one or more computers, assists in sharing of a resource among the users, for example, via the communication terminal.

The schedule management server 8, which is implemented by one or more computers, manages reservations for using each resource and schedules of each user.

### <Hardware Configuration>

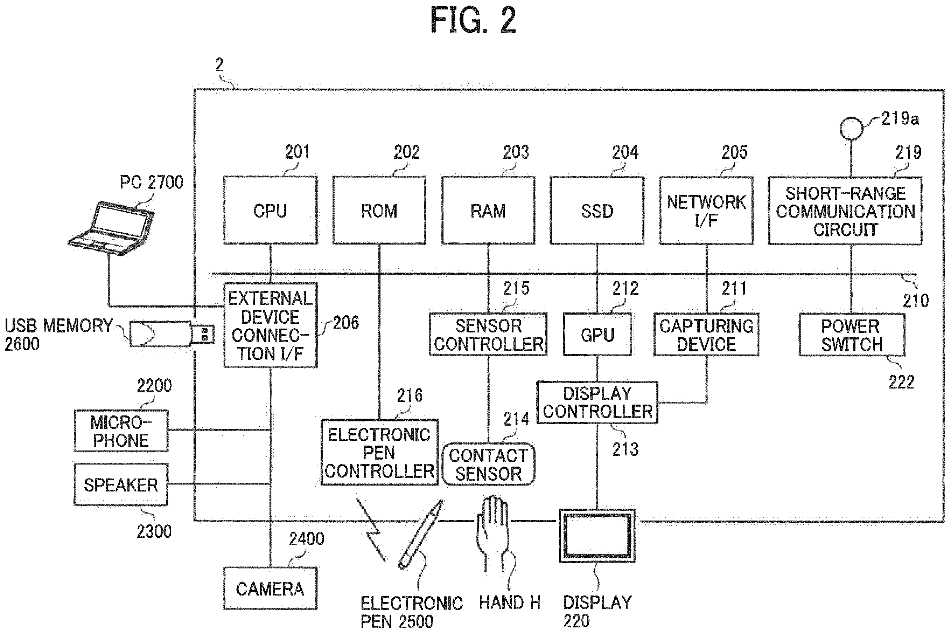

Referring to FIGs. 2 to 5, a hardware configuration of the apparatus or terminal in the sharing system 1 is described according to the embodiment.

### <Hardware Configuration of Electronic Whiteboard>

FIG. 2 is a diagram illustrating a hardware configuration of the electronic whiteboard 2, according to the embodiment. As illustrated in FIG. 2, the electronic whiteboard 2 includes a central processing unit (CPU) 201, a read only memory (ROM) 202, a random access memory (RAM) 203, a solid state drive (SSD) 204, a network interface (I/F) 205, and an external device connection interface (I/F) 206.

The CPU 201 controls entire operation of the electronic whiteboard 2. The ROM 202 stores a control program for operating the CPU 201 such as an Initial Program Loader (IPL). The RAM 203 is used as a work area for the CPU 201. The SSD 204 stores various data such as the control program for the electronic whiteboard 2. The network I/F 205 controls communication with an external device through the communication network 10. The external device connection I/F 206 controls communication with an external resource such as a PC 2700, a USB memory 2600, a microphone 2200, a speaker 2300, and a camera 2400.

The electronic whiteboard 2 further includes a capturing device 211, a graphics processing unit (GPU) 212, a display controller 213, a contact sensor 214, a sensor controller 215, a electronic pen controller 216, a short-range communication circuit 219, and an antenna 219a for the short-range communication circuit 219.

The capturing device 211 acquires image data of an image displayed on a display 220 under control of the display controller 213, and stores the image data in the RAM 203 or the like. The GPU 212 is a semiconductor chip dedicated to processing of a graphical image. The display controller 213 controls display of an image processed at the GPU 212 for output through the display 220 provided with the electronic whiteboard 2. The contact sensor 214 detects a touch onto the display 220 with a electronic pen 2500 or a user's hand H. The sensor controller 215 controls operation of the contact sensor 214. The contact sensor 214 senses a touch input to a specific coordinate on the display 220 using the infrared blocking system. More specifically, the display 220 is provided with two light receiving elements disposed on both upper side ends of the display 220, and a reflector frame surrounding the sides of the display 220. The light receiving elements emit a plurality of infrared rays in parallel to a surface of the display 220. The light receiving elements receive lights passing in the direction that is the same as an optical path of the emitted infrared rays, which are reflected by the reflector frame. The contact sensor 214 outputs an identifier (ID) of the infrared ray that is blocked by an object (such as the user's hand) after being emitted from the light receiving elements, to the sensor controller 215. Based on the ID of the infrared ray, the sensor controller 215 detects a specific coordinate that is touched by the object. The electronic pen controller 216 communicates with the electronic pen 2500 to detect a touch by the tip or bottom of the electronic pen 2500 to the display 220. The short-range communication circuit 219 is a communication circuit that communicates in compliance with the near field radio communication (NFC) (Registered Trademark), the Bluetooth (Registered Trademark), and the like. The power switch 222 turns on or off the power of the electronic whiteboard 2.

The electronic whiteboard 2 further includes a bus line 210. The bus line 210 is an address bus or a data bus, which electrically connects the elements in FIG. 2 such as the CPU 201.

The contact sensor 214 is not limited to the infrared blocking system type, and may be a different type of detector, such as a capacitance touch panel that identifies the contact position by detecting a change in capacitance, a resistance film touch panel that identifies the contact position by detecting a change in voltage of two opposed resistance films, or an electromagnetic induction touch panel that identifies the contact position by detecting electromagnetic induction caused by contact of an object to a display. In addition or in alternative to detecting a touch by the tip or bottom of the electronic pen 2500, the electronic pen controller 216 may also detect a touch by another part of the electronic pen 2500, such as a part held by a hand of the user.

### <Hardware Configuration of Videoconference Terminal>

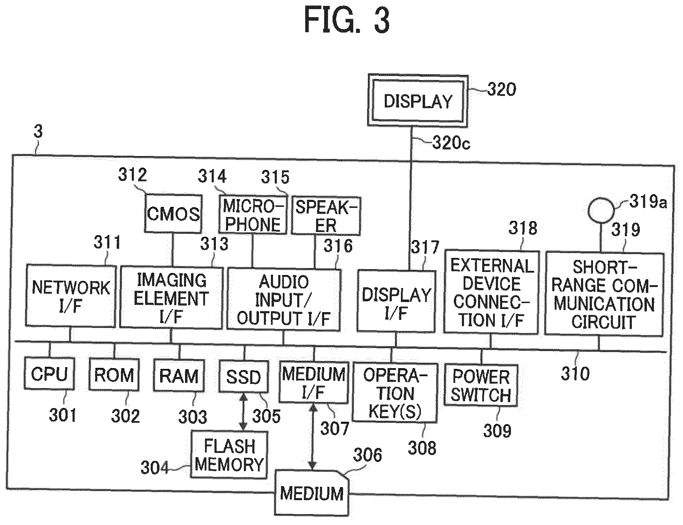

FIG. 3 is a diagram illustrating a hardware configuration of the videoconference terminal 3 according to the embodiment. As illustrated in FIG. 3, the videoconference terminal 3 includes a CPU 301, a ROM 302, a RAM 303, a flash memory 304, a SSD 305, a medium I/F 307, an operation key 308, a power switch 309, a bus line 310, a network I/F 311, a CMOS sensor 312, an imaging element 1/F 313, a microphone 314, a speaker 315, an audio input/output I/F 316, a display I/F 317, an external device connection I/F 318, a short-range communication circuit 319, and an antenna 319a for the short-range communication circuit 319.

The CPU 301 controls entire operation of the videoconference terminal 3. The ROM 302 stores a control program for operating the CPU 301. The RAM 303 is used as a work area for the CPU 301. The flash memory 304 stores various data such as a communication control program, image data, and audio data. The SSD 305 controls reading or writing of various data with respect to the flash memory 304 under control of the CPU 301. In alternative to the SSD, a hard disk drive (HDD) may be used. The medium I/F 307 controls reading or writing of data with respect to a recording medium 306 such as a flash memory. The operation key (keys) 308 is operated by a user to input a user instruction such as a user selection of a communication destination of the videoconference terminal 3. The power switch 309 is a switch that receives an instruction to turn on or off the power of the videoconference terminal 3.

The network I/F 311 allows communication of data with an external device through the communication network 10 such as the Internet. The CMOS sensor 312 is an example of a built-in imaging device capable of capturing a subject under control of the CPU 301. The imaging element 1/F 313 is a circuit that controls driving of the CMOS sensor 312. The microphone 314 is an example of built-in audio collecting device capable of inputting audio under control of the CPU 301. The audio I/O I/F 316 is a circuit for inputting or outputting an audio signal to the microphone 314 or from the speaker 315 under control of the CPU 301. The display I/F 317 is a circuit for transmitting display data to an external display 320 under control of the CPU 301. The external device connection I/F 318 is an interface circuit that connects the video conference terminal 3 to various external devices. The short-range communication circuit 319 is a communication circuit that communicates in compliance with the NFC, the Bluetooth, and the like.

The bus line 310 is an address bus or a data bus, which electrically connects the elements in FIG. 3 such as the CPU 301.

The display 320 may be a liquid crystal or organic electroluminescence (EL) display that displays an image of a subject, an operation icon, or the like. The display 320 is connected to the display I/F 317 by a cable 320c. The cable 320c may be an analog red green blue (RGB) (video graphic array (VGA)) signal cable, a component video cable, a high-definition multimedia interface (HDMI) (Registered Trademark) signal cable, or a digital video interactive (DVI) signal cable.

In alternative to the CMOS sensor 312, an imaging element such as a CCD (Charge Coupled Device) sensor may be used. The external device connection I/F 318 is capable of connecting an external device such as an external camera, an external microphone, or an external speaker through a USB cable or the like. In the case where an external camera is connected, the external camera is driven in preference to the built-in camera under control of the CPU 301. Similarly, in the case where an external microphone is connected or an external speaker is connected, the external microphone or the external speaker is driven in preference to the built-in microphone 314 or the built-in speaker 315 under control of the CPU 301.

The recording medium 306 is removable from the videoconference terminal 3. The recording medium 306 can be any non-volatile memory that reads or writes data under control of the CPU 301, such that any memory such as an EEPROM may be used instead of the flash memory 304.

### <Hardware Configuration of Car Navigation System>

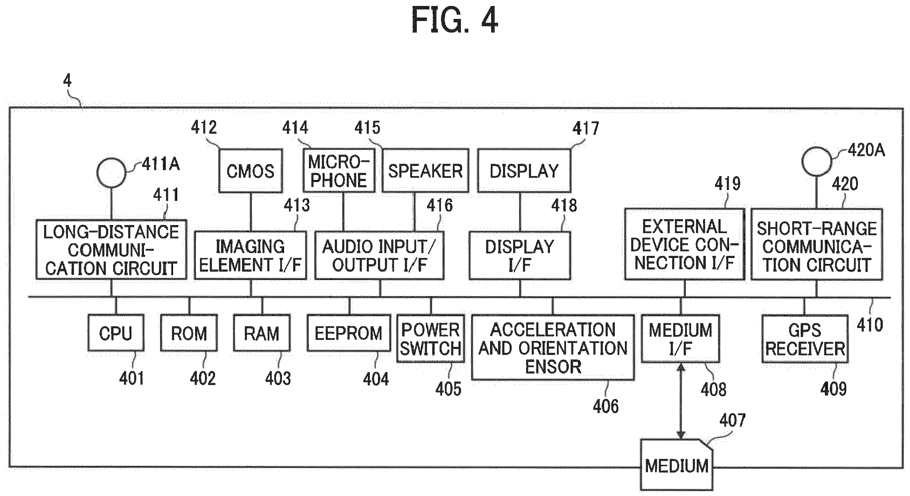

FIG. 4 is a diagram illustrating a hardware configuration of the car navigation system 4 according to the embodiment. As illustrated in FIG. 4, the car navigation system 4 includes a CPU 401, a ROM 402, a RAM 403, an EEPROM 404, a power switch 405, an acceleration and orientation sensor 406, a medium I/F 408, and a GPS receiver 409.

The CPU 401 controls entire operation of the car navigation system 4. The ROM 402 stores a control program for controlling the CPU 401 such as an IPL. The RAM 403 is used as a work area for the CPU 401. The EEPROM 404 reads or writes various data such as a control program for the car navigation system 4 under control of the CPU 401. The power switch 405 turns on or off the power of the car navigation system 4. The acceleration and orientation sensor 406 includes various sensors such as an electromagnetic compass or gyrocompass for detecting geomagnetism, and an acceleration sensor. The medium I/F 408 controls reading or writing of data with respect to a recording medium 407 such as a flash memory. The GPS receiver 409 receives a GPS signal from a GPS satellite.

The car navigation system 4 further includes a long-range communication circuit 411, an antenna 411a for the long-range communication circuit 411, a CMOS sensor 412, an imaging element I/F 413, a microphone 414, a speaker 415, an audio input/output I/F 416, a display 417, a display I/F 418, an external device connection I/F 419, a short-range communication circuit 420, and an antenna 420a for the short-range communication circuit 420.

The long-range communication circuit 411 is a circuit, which receives traffic jam information, road construction information, traffic accident information and the like provided from an infrastructure system external to the vehicle, and transmits information on the location of the vehicle, life-saving signals, etc. back to the infrastructure system in the case of emergency. Examples of such infrastructure include, but not limited to, a road information guidance system such as a Vehicle Information and Communication System (VICS) system. The CMOS sensor 412 is an example of a built-in imaging device capable of capturing a subject under control of the CPU 401. The imaging element 1/F 413 is a circuitthat controls driving of the CMOS sensor 412. The microphone 414 is an example of audio collecting device, which is a built-in type, capable of inputting audio under control of the CPU 401. The audio I/O I/F 416 is a circuit for inputting or outputting an audio signal between the microphone 414 and the speaker 415 under control of the CPU 401. The display 417 may be a liquid crystal or organic electro luminescence (EL) display that displays an image of a subject, an operation icon, or the like. The display 417 has a function of a touch panel. The touch panel is an example of input device that enables the user to input a user instruction for operating the car navigation system 4 through touching a screen of the display 417. The display I/F 418 is a circuit for transmitting display data to the display 417 under control of the CPU 401. The external device connection I/F 419 is an interface circuit that connects the car navigation system 4 to various external devices. The short-range communication circuit 420 is a communication circuit that communicates in compliance with the NFC, the Bluetooth, and the like. The car navigation system 4 further includes a bus line 410. The bus line 410 is an address bus or a data bus, which electrically connects the elements in FIG. 4 such as the CPU 401.

### <Hardware Configuration of Server and PC>

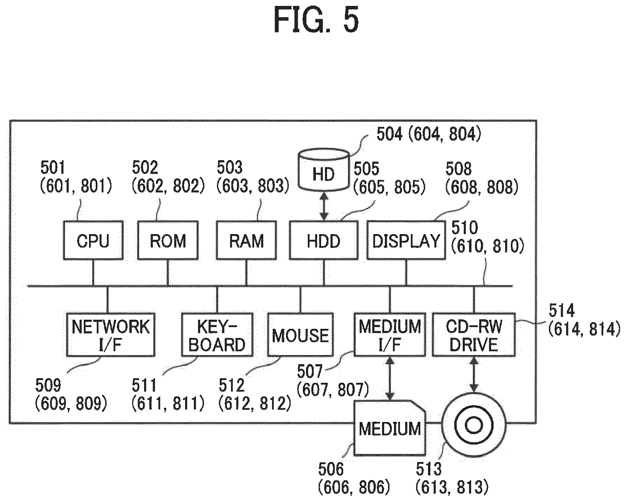

FIG. 5 is a diagram illustrating a hardware configuration of the server (such as the sharing assistant server 6 and the schedule management server 8) and the PC 5, according to the embodiment.

As illustrated in FIG. 5, the PC 5 includes a CPU 501, a ROM 502, a RAM 503, a hard disk (HD) 504, a hard disk drive (HDD) 505, a medium I/F 507, a display 508, a network I/F 509, a keyboard 511, a mouse 512, a CD-RW drive 514, and a bus line 510.

The CPU 501 controls entire operation of the PC 5. The ROM 502 stores a control program for controlling the CPU 501 such as an IPL. The RAM 503 is used as a work area for the CPU 501. The HD 504 stores various data such as a control program. The HDD 505, which may also referred to as a hard disk drive controller, controls reading or writing of various data to or from the HD 504 under control of the CPU 501. The medium I/F 507 controls reading or writing of data with respect to a recording medium 506 such as a flash memory. The display 508 displays various information such as a cursor, menu, window, characters, or image. The network I/F 509 is an interface that controls communication of data with an external device through the communication network 10. The keyboard 511 is one example of input device provided with a plurality of keys for allowing a user to input characters, numerals, or various instructions. The mouse 512 is one example of input device for allowing the user to select a specific instruction or execution, select a target for processing, or move a curser being displayed. The CD-RW drive 514 reads or writes various data with respect to a Compact Disc ReWritable (CD-RW) 513, which is one example of removable recording medium.

The PC 5 further includes a bus line 510. The bus line 510 may be an address bus or a data bus, which electrically connects various elements such as the CPU 501 of FIG. 5.

Still referring to FIG. 5, a hardware configuration of each of the sharing assistant server 6 and the schedule management server 8 is described.

Referring to FIG. 5, the sharing assistant server 6, which is implemented by the general-purpose computer, includes a CPU 601, a ROM 602, a RAM 603, a HD 604, a HDD 605, a medium I/F 607, a display 608, a network I/F 609, a keyboard 611, a mouse 612, a CD-RW drive 614, and a bus line 610. The sharing assistant server 6 may be provided with a recording medium 606 or a CD-RW 613. Since these elements are substantially similar to the CPU 501, ROM 502, RAM 503, HD 504, HDD 505, medium I/F 507, display 508, network I/F 509, keyboard 511, mouse 512, CD-RW drive 514, and bus line 510, description thereof is omitted.

Referring to FIG. 5, the schedule management server 8, which is implemented by the general-purpose computer, includes a CPU 801, a ROM 802, a RAM 803, a HD 804, a HDD 805, a medium I/F 807, a display 808, a network I/F 809, a keyboard 811, a mouse 812, a CD-RW drive 814, and a bus line 810. The schedule management server 8 may be provided with a recording medium 806 or a CD-RW 813. Since these elements are substantially similar to the CPU 501, ROM 502, RAM 503, HD 504, HDD 505, medium I/F 507, display 508, network I/F 509, keyboard 511, mouse 512, CD-RW drive 514, and bus line 510, description thereof is omitted.

Further, any one of the above-described control programs may be recorded in a file in a format installable or executable on a computer-readable recording medium for distribution. Examples of the recording medium include, but not limited to, Compact Disc Recordable (CD-R), Digital Versatile Disc (DVD), blue-ray disc, and SD card. In addition, such recording medium may be provided in the form of a program product to users within a certain country or outside that country.

The sharing assistant server 6 may be configured by a single computer or a plurality of computers to which divided portions (functions, means, or storages) are arbitrarily allocated. This also applies to the schedule management server 8.

### <Functional Configuration of Communication System>

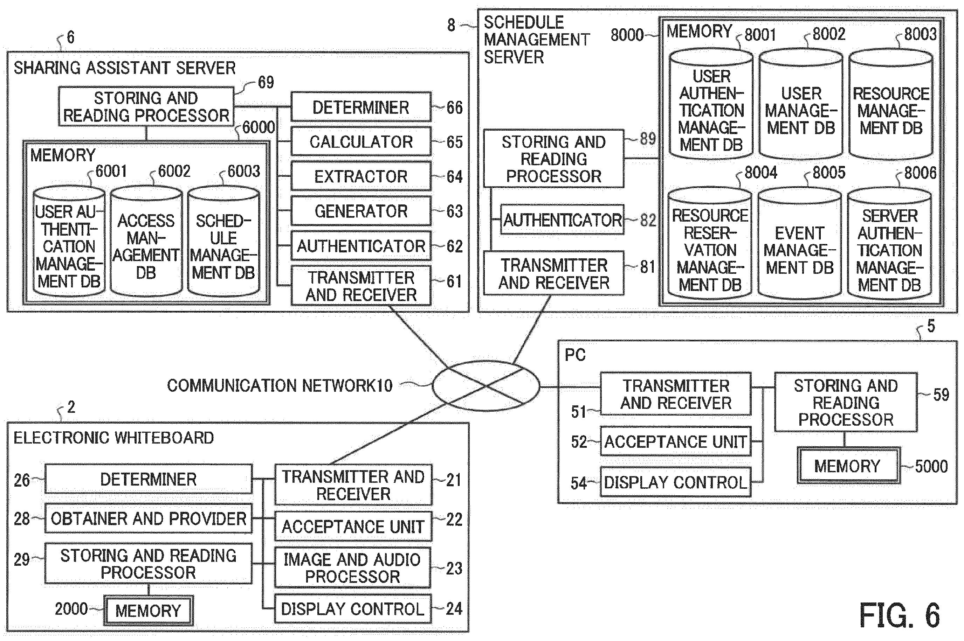

Referring to FIGs. 6 to 9, a functional configuration of the sharing system 1 is described according to the embodiment. FIG. 6 is a diagram illustrating a functional configuration of the sharing system 1. In FIG. 6, only a part of those terminals, devices, and servers illustrated in FIG. 1 is illustrated, which relates to processing or operation to be described below. More specifically, the following illustrates an example case in which the user uses the conference room X as a resource, in which the electronic whiteboard 2 is provided. In other words, the videoconference terminal 3 and the car navigation system 4 do not have to be provided in the following embodiment.

### <Functional Configuration of Electronic Whiteboard>

As illustrated in FIG. 6, the electronic whiteboard 2 includes a transmitter and receiver 21, an acceptance unit 22, an image and audio processor 23, a display control 24, a determiner 26, an obtainer and provider 28, and a storing and reading processor 29. These units are functions that are implemented by or that are caused to function by operating any of the elements illustrated in FIG. 2 in cooperation with the instructions of the CPU 201 according to the electronic whiteboard control program expanded from the SSD 204 to the RAM 203. The electronic whiteboard 2 further includes a memory 2000, which is implemented by the RAM 203, SSD 204, or USB memory 2600 illustrated in FIG. 2.

### (Each functional unit of Electronic Whiteboard)

Next, each functional unit of the electronic whiteboard 2 is described according to the embodiment. The transmitter and receiver 21, which may be implemented by the instructions of the CPU 201, the network I/F 205, and the external device connection I/F 206, illustrated in FIG. 2, transmits or receives various data (or information) to or from other terminal, apparatus, or system through the communication network 10.

The acceptance unit 22, which is implemented by the instructions of the CPU 201, the contact sensor 214, and the electronic pen controller 216, illustrated in FIG. 2, accepts various inputs from the user.

The image and audio processor 23 is implemented by the instructions of the CPU 201, illustrated in FIG. 2. The image and audio processor 23 applies image processing to an image of a subject that has been captured by the camera 2400. After the audio of the user is converted to an audio signal by the microphone 2200, the image and audio processor 23 applies processing to audio data based on this audio signal. The image and audio processor 23 outputs the audio signal according to the audio data to the speaker 2300, and the speaker 2300 outputs audio. The image and audio processor 23 obtains drawing image data, drawn by the user with the electronic pen 2500 or the user's hand H onto the display 220, and converts the drawing image data to coordinate data. For example, when the electronic whiteboard 2 transmits the coordinate data to an electronic whiteboard 2 at another site, the electronic whiteboard 2 at the another site controls the display 220 to display a drawing image having the same content based on the received coordinate data.

The display control 24, which is implemented by the instructions of the CPU 201 illustrated in FIG. 2 and by the display controller 213 illustrated in FIG. 2, controls the display 220 to display a drawing image.

The determiner 26, which may be implemented by the instructions of the CPU 201 illustrated in FIG. 2, outputs a determination result.

The obtainer and provider 28, which is implemented by the instructions of the CPU 201 and the short-range communication circuit 219 with the antenna 219a, illustrated in FIG. 2, communicates with a terminal carried by the user, such as an IC card or a smart phone to obtain or provide data from or to the IC card or the smart phone by short-range communication.

The storing and reading processor 29, which is implemented by the instructions of the CPU 201 and the SSD 204 illustrated in FIG. 2, performs processing to store various types of data in the memory 2000 or to read various types of data stored in the memory 2000. Further, every time image data and audio data are received in performing communication with other electronic whiteboard or videoconference terminal, the memory 2000 overwrites the image data and audio data. The display 220 displays an image based on image data before being overwritten, and the speaker 2300 outputs audio based on audio data before being overwritten.

Even if the videoconference terminal 3 or the car navigation system 4 is used as the communication terminal, the videoconference terminal 3 and car navigation system 4 are substantially similar in function to the electronic whiteboard 2, such that description thereof is omitted.

### <Functional Configuration of PC>

As illustrated in FIG. 6, the PC 5 includes a transmitter and receiver 51, an acceptance unit 52, a display control 54, and a storing and reading processor 59. These units are functions that are implemented by or that are caused to function by operating any of the elements illustrated in FIG. 5 in cooperation with the instructions of the CPU 501 according to the control program expanded from the HD 504 to the RAM 503. The PC 5 further includes a memory 5000 implemented by the HD 504 illustrated in FIG. 5.

### (Each functional unit of PC)

Next, a functional configuration of the PC 5 is described in detail. The transmitter and receiver 51, which is implemented by the instructions from the CPU 501 and by the network I/F 509 illustrated in FIG. 5, transmits or receives various types of data (or information) to or from another terminal, device, apparatus, or system via the communication network 10.

The acceptance unit 52, which is implemented by the instructions of the CPU 501, keyboard 511, and mouse 512, illustrated in FIG. 5, accepts various inputs from the user.

The display control 54, which is implemented by the instructions of the CPU 501 illustrated in FIG. 5, controls the display 508 to display an image.

The storing and reading processor 59, which may be implemented by the instructions of the CPU 501 and the HDD 505, illustrated in FIG. 5, performs processing to store various types of data in the memory 5000 or read various types of data stored in the memory 5000.

### <Functional Configuration of Sharing Assistant Server>

The sharing assistant server 6 includes a transmitter and receiver 61, an authenticator 62, a generator 63, an extractor 64, a calculator 65, a determiner 66, and a storing and reading processor 69. These units are functions that are implemented by or that are caused to function by operating any of the hardware elements illustrated in FIG. 5 in cooperation with the instructions of the CPU 601 according to a sharing assistant program expanded from the HD 604 to the RAM 603. The sharing assistant server 6 includes a memory 6000 implemented by the HD 604 illustrated in FIG. 5.

### (User authentication management table)

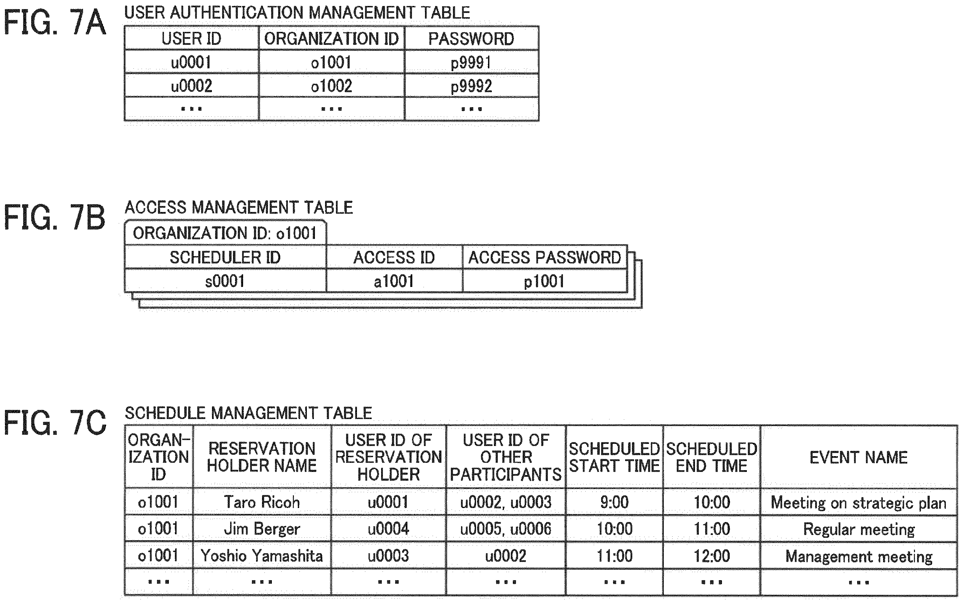

FIG. 7A is an illustration of an example data structure of a user authentication management table. The memory 6000 stores a user authentication management DB 6001 such as the user authentication management table illustrated in FIG. 7A. The user authentication data management table stores, for each user being managed, a user ID for identifying the user, an organization ID for identifying an organization to which the user belongs, and a password, in association. The organization ID may be represented as a domain name assigned to an organization such as a group for managing a plurality of computers on the communication network.

### (Access management table)

FIG. 7B is an illustration of an example data structure of an access management table. The memory 6000 stores an access management DB 6002, such as the access management table illustrated in FIG. 7B. The access management table stores, for each organization ID, a scheduler ID for identifying a schedule, and an access ID and an access password needed for authenticating a user in accessing the corresponding scheduler managed by the schedule management server 8, in association. The access ID and the access password are needed for the sharing assistant server 6 to use a service (function) provided by the schedule management server 8 via such as the Web API (Application Programming Interface). Since the schedule management server 8 manages a plurality of schedulers, which may differ among the organizations, the access management table is provided to manage schedulers.

### (Schedule management table)

FIG. 7C is an illustration of an example data structure of a schedule management table. The memory 6000 stores a schedule management DB 6003, which is implemented by the schedule management table illustrated in FIG. 7C. The schedule management table stores, for each resource that has been reserved for an event, an organization ID of a user (reservation holder) who made a reservation for using the resource, a name of the user as the reservation holder, a user ID of the user as the reservation holder, a user ID(s) of one or more other users (other participants) who will be participating in the event, a scheduled start time of the event, a scheduled end time of the event, and a name of the event, in association. The schedule management table of FIG. 7C is generated based on resource reservation information and event schedule information, each managed by the schedule management server 8, as described below.

Here, a reservation holder is a user who has reserved to use a particular resource. The scheduled start time indicates a time when the user plans to start using the reserved resource. The scheduled end time indicates a time when the user plans to end using the reserved resource. That is, with the scheduled start time and the scheduled end time, a scheduled time period for the event is defined. The event name is a name of the event to be held by the user who has reserved the resource, using the reserved resource.

For example, assuming that the resource is a conference room, the user who made the reservation is an organizer who has organized a meeting (an example of event) to be held in that conference room. In such case, a record for the conference room contains the organization ID of an organization to which the organizer belongs, a name of the organizer, a user ID of the organizer, user IDs of other participants in the meeting, a scheduled start time of the meeting, a scheduled end time of the meeting, and a name of the meeting.

In case where the resource is a vehicle, the user who made the reservation is a driver who will drive the vehicle. In such case, a record for the vehicle contains the organization ID of an organization to which the driver belongs, a name of the driver, a user ID of the driver, user IDs of other passengers in the vehicle, a scheduled start time when driving starts, and a scheduled end time when driving ends. The name of the event, in this case, may be arbitrarily set by the driver as the reservation holder.

In case where the resource is information such as account information, the user who made the reservation is a user who will use the service (such as videoconferencing service) using the account information, a name of the user, a user ID of the user, user IDs of other participants using the service, a scheduled start time when the user starts using the service, and a scheduled end time when the user ends using the service. The name of the event, which may be set by the user, may represent a name of the meeting to be held, for example.

### (Each functional unit of sharing assistant server)

Next, each functional unit of the sharing assistant server 6 is described in detail according to the embodiment. In the following description of the functional configuration of the sharing assistant server 6, relationships of one or more hardware elements in FIG. 5 with each functional unit of the sharing assistant server 6 in FIG. 6 will also be described.

The transmitter and receiver 61 of the sharing assistant server 6 illustrated in FIG. 6, which is implemented by the instructions of the CPU 601 illustrated in FIG. 5 and by the network I/F 609 illustrated in FIG. 5, transmits or receives various types of data (or information) to or from another terminal, device, or system via the communication network 10.

The authenticator 62, which is implemented by the instructions of the CPU 601 illustrated in FIG. 5, determines whether data (user ID, organization ID, and password) transmitted from the communication terminal matches any data previously registered in the user authentication management DB 6001, to authenticate the user who will use the service provided by the sharing system 1.

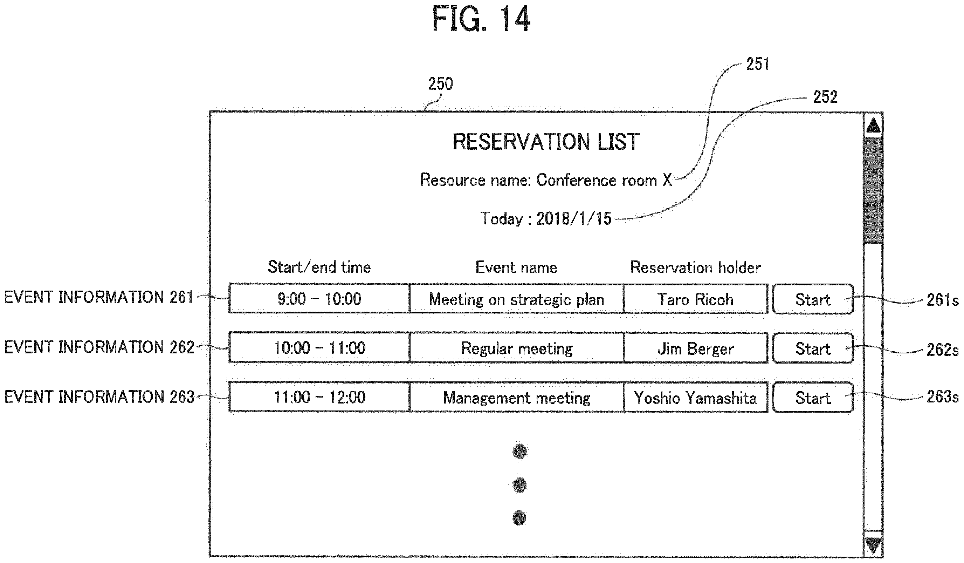

The generator 63, which is implemented by the instructions of the CPU 601 as illustrated in FIG. 5, generates a reservation list screen as illustrated in FIG. 14, based on resource reservation information and event schedule information transmitted from the schedule management server 8. For example, the generator 63 may generate the reservation list screen, based on the schedule management table of FIG. 7C, which is generated based on the resource reservation information and the event schedule information.

The extractor 64, which is implemented by the instructions of the CPU 601 as illustrated in FIG. 5, extracts information related to a particular time, from the resource reservation information and the event schedule information transmitted from the schedule management server 8. For example, it is assumed that the resource is a specific conference room. The extractor 64 extracts, from the resource reservation information, the scheduled start time of a next meeting (event) to be held today in the specific conference room that the user is currently using. Further, the extractor 64 extracts, from the resource reservation information, the scheduled start time of a next meeting (event) to be held today in a conference room other than the specific conference room that the user is currently using. Further, the extractor 64 extracts, from the event schedule information, the scheduled start time of an event that the user who made a reservation and other participants are supposed to participate, after the scheduled end time of the current event reaches. The extracted data may be used for processing by the calculator 65 as described below.

The calculator 65, which is implemented by instructions from the CPU 601 illustrated in FIG. 5, calculates a time period from the current time to the scheduled start time of a next event for using the resource (or other resource), and/or a time period from the current time to the scheduled start time of a next event of each user who is currently using the resource. For example, the calculator 65 calculates a first time period from the current time to the scheduled start time of a next event that uses the resource, before the current time reaches the scheduled end time of the current event in which the user currently uses the resource. Further, the calculator 65 calculates a second time period from the current time to the scheduled start time of an event that uses a resource other than the resource currently used. Furthermore, the calculator 65 calculates a third time period from the current time to the scheduled start time of a next event registered for each user who is currently participating in the event that uses the resource.

The determiner 66, which may be implemented by the instructions of the CPU 601 illustrated in FIG. 5, makes determinations based on results of calculation to output information. This determination will be described later.

The storing and reading processor 69, which is implemented by the instructions of the CPU 601 illustrated in FIG. 5 and the HDD 605 illustrated in FIG. 5, performs processing to store various types of data in the memory 6000 or read various types of data stored in the memory 6000.

### <Functional Configuration of Schedule Management Server>

The schedule management server 8 includes a transmitter and receiver 81, an authenticator 82, and a storing and reading processor 89. These units are functions that are implemented by or that are caused to function by operating any of the elements illustrated in FIG. 6 in cooperation with the instructions of the CPU 801 according to the schedule management program expanded from the HD 804 to the RAM 803. The schedule management server 8 includes a memory 8000 implemented by the HD 804 illustrated in FIG. 5.

### (User authentication management table)

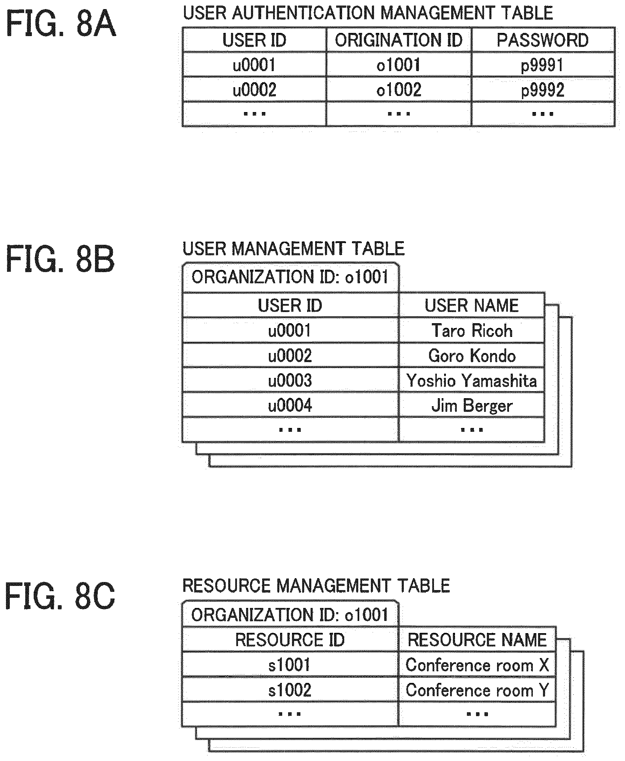

FIG. 8A is an illustration of an example data structure of a user authentication management table. The memory 8000 stores the user authentication management DB 8001 such as the user authentication management table illustrated in FIG. 8A. The user authentication management table of FIG. 8A stores, for each user being managed, a user ID for identifying the user, an organization ID for identifying an organization to which the user belongs, and a password, in association.

### (User management table)

FIG. 8B is an illustration of an example data structure of a user management table. The memory 8000 stores a user management DB 8002, which is implemented by the user management table illustrated in FIG. 8B. The user management table stores, for each organization ID, one or more user IDs each identifying the user belonging to that organization, and names of the one or more users.

### (Resource management table)

FIG. 8C is an illustration of an example data structure of a resource management table. The memory 8000 stores a resource management DB 8003, which is implemented by the resource management table illustrated in FIG. 8C. The resource management table stores, for each organization ID, one or more resource IDs each identifying the resource managed by that organization, and names of the one or more resources, in association.

### (Resource reservation management table)

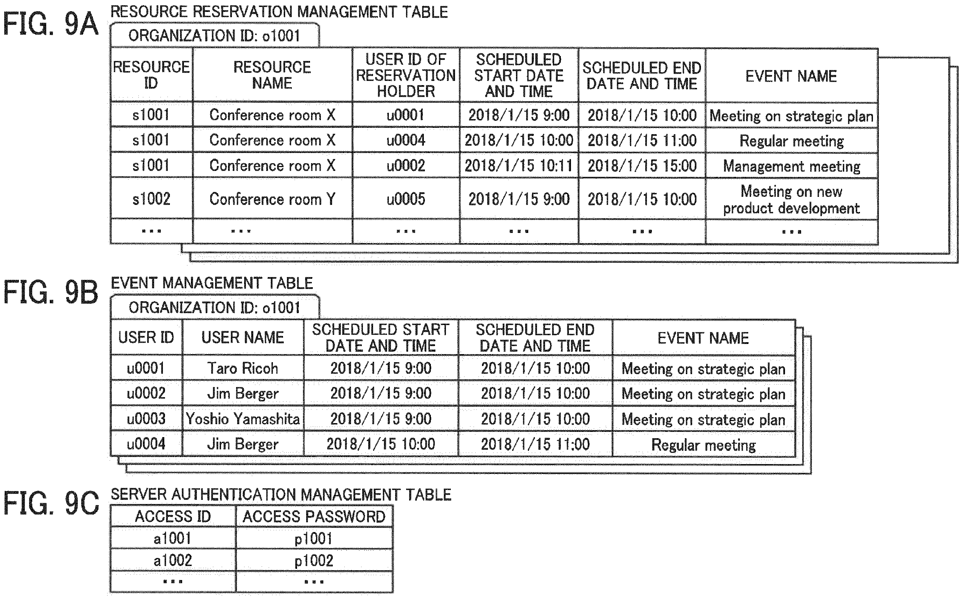

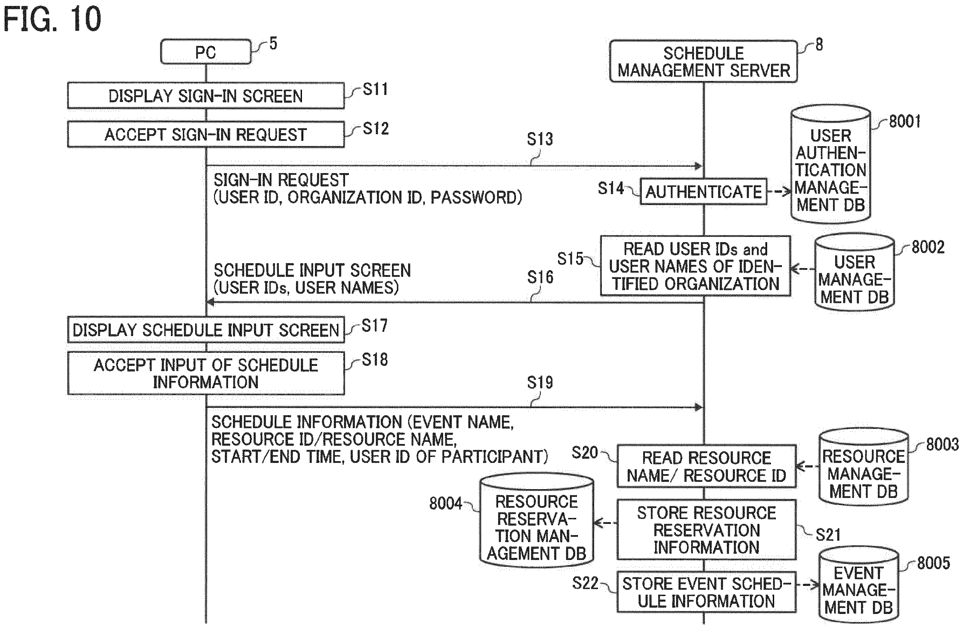

FIG. 9A is an illustration of an example data structure of a resource reservation management table. The memory 8000 stores a resource reservation management DB 8004, which is implemented by the resource reservation management table illustrated in FIG. 9A. The resource reservation management table manages, for each organization, resource reservation information associating various data items relating to one or more resources that have been reserved. The resource reservation information includes, for each organization ID, a resource ID of the resource, a resource name of the resource, a user ID of a reservation holder, a scheduled start date and time, a scheduled end date and time, and a name of an event in which the resource is used. The scheduled start date and time indicates a date and time when the user plans to start using the reserved resource. The scheduled end date and time indicates a date and time when the user plans to end using the reserved resource. In this example, while the date and time is expressed in terms of year, month, day, hour, minute, second, and time zone, FIG. 10A only shows year, month, day, hour, and minute for simplicity.

### (Event management table)

FIG. 9B is an illustration of an example data structure of the event management table. The memory 8000 stores an event management DB 8005, which is implemented by the event management table as illustrated in FIG. 9. The event management table is used to manage event schedule information of each user in the organization. Specifically, the schedule management table stores, for each organization ID, a user ID of the user, a name of the user, a scheduled start date and time of an event, a scheduled end date and time of such event, and a name of such event, in association. The scheduled start date and time of the event indicates a date and time of the event that the user plans to participate starts. The scheduled end date and time of the event indicates a date and time of the event that the user plans to participate ends. In this example, while the date and time is expressed in terms of year, month, day, hour, minute, second, and time zone, FIG. 10B only shows year, month, day, hour, and minute for simplicity.

### (Server authentication management table)

FIG. 9C is an illustration of an example data structure of a server authentication management table. The memory 8000 stores a server authentication management DB 8006, such as the server authentication management table illustrated in FIG. 9C. The server authentication management table stores an access ID and an access password in association. The schedule management server 8 determines whether the access ID and the access password transmitted from the sharing assistant server 6 matches the access ID and the access password stored in the server authentication management DB 8006.

### (Each functional unit of schedule management server)

Next, each functional unit of the schedule management server 8 is described in detail according to the embodiment. In the following description of the functional configuration of the schedule management server 8, relationships of one or more hardware elements in FIG. 5 with each functional unit of the schedule management server 8 in FIG. 6 will also be described.

The transmitter and receiver 81 of the schedule management server 8 illustrated in FIG. 6, which is implemented by the instructions of the CPU 801 illustrated in FIG. 5 and by the network I/F 809 illustrated in FIG. 5, transmits or receives various types of data (or information) to or from another terminal, device, or system via the communication network 10.

The authenticator 82, which is implemented by the instructions of the CPU 801 illustrated in FIG. 5, determines whether data (user ID, organization ID, and password) transmitted from the PC 5, or any device used for registering reservation, matches any data previously registered in the user authentication management DB 8001. The authenticator 82 further determines whether data (access ID, access password) transmitted from the sharing assistant server 6 matches any data previously registered in the server authentication management DB 8006 to authenticate the sharing assistant server 6.

The storing and reading processor 89, which is implemented by the instructions of the CPU 801 illustrated in FIG. 5 and the HDD 805 illustrated in FIG. 5, performs processing to store various types of data in the memory 8000 or read various types of data stored in the memory 8000.

In this disclosure, any one of the IDs described above is an example of identification information identifying the device or terminal, or the user operating the device or terminal. Examples of the organization ID include, but not limited to, a name of a company, a name of a branch, a name of a business unit, a name of a department, a name of a region, etc. In alternative to the user ID identifying a specific user, an employee number, a driver license number, and an individual number called "My Number" under the Japan's Social Security and Tax Number System, may be used as identification information for identifying the user.

### «Operation»

Referring to FIGs. 10 to 20, various operations performed by the sharing system 1 is described according to one or more embodiments.

### <Processing to register schedule>

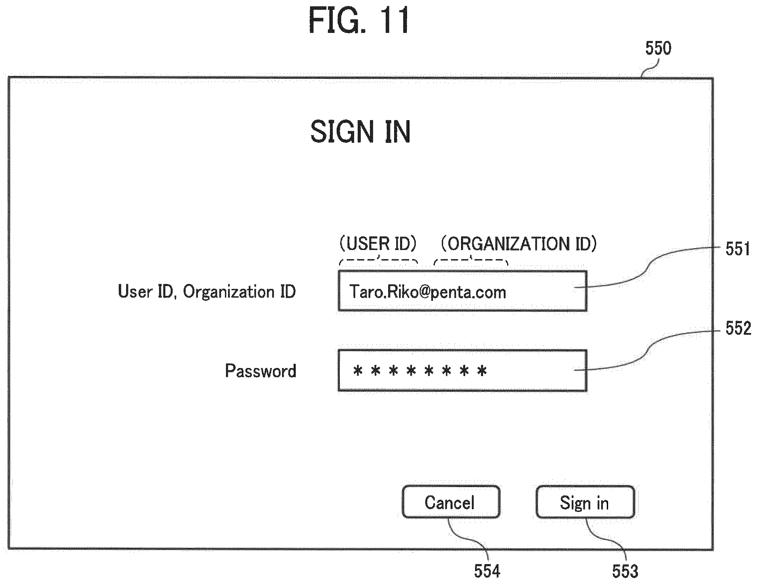

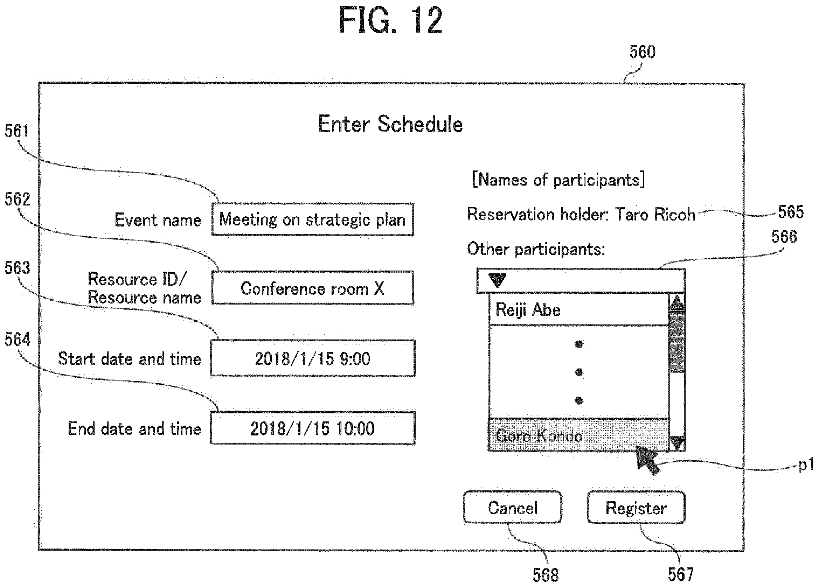

Referring to FIGs. 10 to 12, processing of registering a schedule of a user A (Taro Ricoh) to the schedule management server 8, using the PC 5, is described according to an embodiment. FIG. 10 is a sequence diagram illustrating a schedule registration processing, performed by the PC 5 and the schedule management server 8, according to the embodiment. FIG. 11 is an illustration of an example sign-in screen. FIG. 12 is an illustration of an example schedule input screen.

In response to an operation performed by the user A using such as the keyboard 511 of the PC 5, the display control 54 of the PC 5 displays a sign-in screen 550 on the display 508 as illustrated in FIG. 11 (S11). The sign-in screen 550 allows the user to sign (log) into the schedule management server 8. The sign-in screen 550 includes an entry field 551 for entering a user ID and an organization ID of the user, an entry field 552 for entering a password, a sign-in button 553 to be pressed when executing sign-in processing, and a cancel button 554 to be pressed when canceling the sign-in processing. In this case, the user ID and the organization ID are each extracted from an e-mail address of the user A. Specifically, a user name of the email address represents the user ID, and a domain name of the email address represents the organization ID. While only one entry field 551 for entering the user ID and the organization ID (in this case, the email address of the user) is illustrated in FIG. 11, an entry field may be provided for each of the user ID and the organization ID.

Through the sign-in screen 550, the user enters the user ID and the organization ID of his/her own into the entry field 551, enters the password of his/her own into the entry field 552, and presses the sign in button 553. In response to such user operation, the acceptance unit 52 of the PC 5 accepts a request for sign-in processing (S12). The transmitter and receiver 51 of the PC 5 transmits sign-in request information to the schedule management server 8 (S13). The sign-in request information includes the user ID, organization ID, and password, which are accepted at S12. Accordingly, the transmitter and receiver 81 of the schedule management server 8 receives the sign-in request information.

Next, the authenticator 82 of the schedule management server 8 authenticates the user A using the user ID, the organization ID, and the password that are received (S14). Specifically, the storing and reading processor 89 determines whether a set of the user ID, the organization ID, and the password, which is obtained from the sign-in request information, has been registered in the user authentication management DB 8001 (FIG. 8A) managed by the schedule management server 8. When there is the set of the user ID, the organization ID, and the password in the user authentication management DB 8001, the authenticator 82 determines that the user A who has sent the sign-in request is an authorized user. When there is no such set of the user ID, the organization ID, and the password in the user authentication management DB 8001, the authenticator 82 determines that the user A is an unauthorized (illegitimate) user. When it is determined that the user A is an illegitimate user, the transmitter and receiver 81 sends to the PC 5 a notification indicating the illegitimate user. In the following, it is assumed that the user A is determined to be an authorized user.

Next, the storing and reading processor 89 of the schedule management server 8 searches the user management DB 8002 (FIG. 8B), using the organization ID received at S13 as a search key, to obtain all user IDs and all user names that are associated with the received organization ID (S15). The transmitter and receiver 81 transmits schedule input screen information to the PC 5 (S16). The schedule input screen information includes all user IDs and all user names read out at S15. Here, all user names include the name of the user A who has entered various information at S12 to request for sign-in processing to make reservations. The transmitter and receiver 51 of the PC 5 receives the schedule input screen information.

Next, the display control 54 of the PC 5 controls the display 508 to display a schedule input screen 560 as illustrated in FIG. 12 (S17). The schedule input screen 560 includes an entry field 561 for an event name, an entry field 562 for a resource ID or a resource name, and an entry field 563 for a scheduled start date and time of the event (use of the resource), an entry field 564 for a scheduled end date and time of the event (use of the resource), a display field 565 for displaying a name of a reservation holder (in this example, the user A) who is making a reservation, a selection menu 566 for selecting one or more participants other than the reservation holder by name, a registration button 567 to be pressed when requesting for registration of the reservation, and a cancel button 568 to be pressed when cancelling any content being entered or has been entered. In this example, the name of the reservation holder is a name of the user who has entered various information using the PC 5 to request for sing-in processing at S12. Further, the selection menu 566 is generated based on information on the names of all users who belong to the identified organization, received at S16. FIG. 12 illustrates a mouse pointer p1.

Instead of entering the name of the resource, the user may enter an email address of the resource in the entry field 562, as an identifier of the resource to be reserved. Alternatively, the selection menu 566 may allow the reservation holder to select one or more resources by name, from a list shown by the selection menu 566. Further, in addition to the resource that the user is making a reservation (in this case, the conference room X), the user may select any resource to be used for the event. When a name of a particular resource is selected from the selection menu 566, that selected resource is added as one of participants in the event. For example, such resource may be any device to be used for the event that the user is making the reservation, such as a projector to be used during the meeting.

The user A enters items as described above in the entry fields 561 to 564, selects the name of each user participating in the event from the selection menu 566 by moving the pointer p1 with the mouse, and presses the registration button 567. In response to pressing of the registration button 567, the acceptance unit 52 of the PC 5 accepts input of various data, as schedule information (S18). The transmitter and receiver 51 transmits the schedule information, which has been accepted, to the schedule management server 8 (S19). The schedule information includes an event name, a resource ID (or a resource name), a scheduled start date and time, a scheduled end date and time, and a user ID of each participant. When a resource ID is entered in the entry field 562 on the schedule input screen 560, the PC 5 transmits the entered resource ID as part of schedule information. When a resource name is entered in the entry field 562, the PC 5 transmits the entered resource name as part of schedule information. Here, only the user name is selected from the selection menu 566 on the schedule input screen 560. However, since the PC 5 has received the user IDs at S16, the PC 5 transmits the user ID corresponding to each of the user names that have been selected as part of schedule information. Accordingly, the transmitter and receiver 81 of the schedule management server 8 receives the schedule information.

Next, the storing and reading processor 89 of the schedule management server 8 searches the resource management DB 8003 (FIG. 8C) using the resource ID (or resource name) received at S19 as a search key, to obtain the corresponding resource name (or resource ID) (S20).

The storing and reading processor 89 stores resource reservation information in the resource reservation management DB 8004 (FIG. 9A) (S21). In this case, the storing and reading processor 89 adds one record of resource reservation information to the resource reservation management table in the resource reservation management DB 8004 managed by a scheduler for the organization to which the user as the reservation holder belongs. The resource reservation information is generated based on the schedule information received at S19 and the resource name (or resource ID) read out at S20. Specifically, the resource ID and the resource name are either obtained from the schedule information or read out at S20. The user ID of the reservation holder is received at S14. Alternatively, the user ID may be obtained from the schedule information if it contains such information. The scheduled start date and time in the resource reservation management DB 8004 corresponds to the scheduled start date and time in the schedule information. The scheduled end date and time in the resource reservation management DB 8004 corresponds to the scheduled end date and time in the schedule information. The event name is obtained from the schedule information.

The storing and reading processor 89 stores the event schedule information in the event management DB 8005 (FIG. 9B) (S22). In this case, the storing and reading processor 89 adds one record of event schedule information to the event management table in the event management DB 8005 managed by the scheduler for the organization to which the user as the reservation holder belongs. The event schedule information is generated based on the schedule information received at S19. Specifically, the user ID and the user name are either obtained from the schedule information or read out at S20. The event start schedule date and time in the event management DB 8005 corresponds to the scheduled start date and time in the schedule information. The event end schedule date and time in the event management DB 8005 corresponds to the scheduled end date and time in the schedule information. The event name is obtained from the schedule information.

As described above, the user A registers his schedule to the schedule management server 8.

### <Processing to start event>

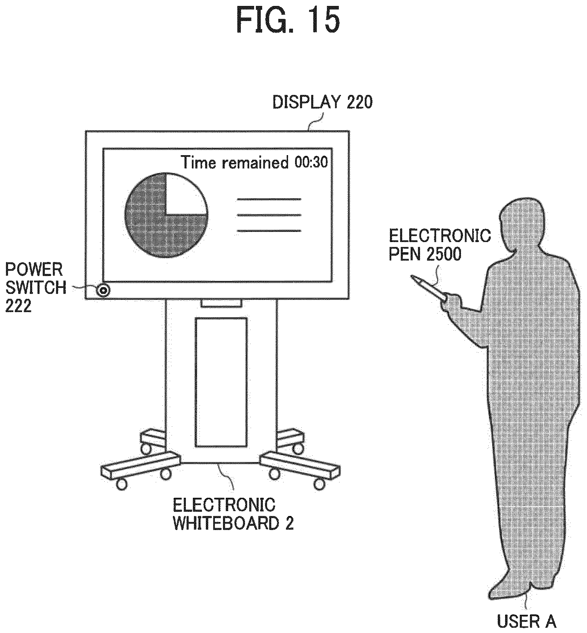

Referring to FIGs. 13 to 15, operation of carrying out a meeting with meeting participants using the electronic whiteboard 2, in the conference room X that has been reserved by the user A (Taroh Ricoh), is described according to an embodiment. FIG. 13 is a sequence diagram illustrating a processing to start an event, such as a meeting, according to the embodiment. FIG. 14 is an illustration of an example resource reservation list screen. FIG. 15 is an illustration for explaining a use scenario of the electronic whiteboard 2 by a user, according to the embodiment.

Referring to FIG. 13, as the user A operates the electronic whiteboard 2, the display control 24 of the electronic whiteboard 2 displays, on the display 220, a sign-in screen for allowing sign-in (S31). Since the sign-in screen is substantially similar in function and appearance to the sign-in screen illustrated in FIG. 11, description thereof is omitted.

Through the sign-in screen, the user A enters a user ID, an organization ID, and a password of his/her own into the entry field displayed by the electronic whiteboard 2, and presses the sign-in button. In response to such user operation, the acceptance unit 22 of the electronic whiteboard 2 accepts a request for sign-in processing (S32). The transmitter and receiver 21 of the electronic whiteboard 2 transmits sign-in request information indicating a sign-in request to the sharing assistant server 6 (S33). The sign-in request information includes the user ID, organization ID, and password, which are accepted at S32. Accordingly, the transmitter and receiver 61 of the sharing assistant server 6 receives the sign-in request information.

Next, the authenticator 62 of the sharing assistant server 6 authenticates the user A using the user ID, the organization ID, and the password received at S33 (S34). Specifically, the storing and reading processor 69 determines whether a set of the user ID, the organization ID, and the password, which is obtained from the sign-in request information at S33, has been registered in the user authentication management DB 6001 (FIG. 7A). When there is the set of the user ID, the organization ID, and the password in the user authentication management DB 6001, the authenticator 62 determines that the user A who has sent the sign-in request is an authorized user. When there is no such set of the user ID, the organization ID, and the password in the user authentication management DB 6001, the authenticator 62 determines that the user A is an unauthorized (illegitimate) user. When it is determined that the user A is an illegitimate user, the transmitter and receiver 61 sends to the electronic whiteboard 2, a notification indicating the illegitimate user. In the following, it is assumed that the user A is determined to be an authorized user.

Next, the storing and reading processor 69 of the sharing assistant server 6 searches the access management DB 6002 (FIG. 7B) using the organization ID received at S33 as a search key to obtain the scheduler ID, access ID, and access password that are stored for the received organization ID (S35).

The transmitter and receiver 61 of the sharing assistant server 6 transmits, to the schedule management server 8, reservation request information indicating a request for resource reservation information of a resource, and schedule request information indicating a request for event schedule information of a user (S36). The reservation request information and the schedule request information each include the user ID received at S33, and the scheduler ID, the access ID, and the password that are read out at S35. Accordingly, the transmitter and receiver 81 of the schedule management server 8 receives the reservation request information and the schedule request information.

Next, the authenticator 82 of the schedule management server 8 authenticates the sharing assistant server 6 using the access ID and the access password (S37). Specifically, the storing and reading processor 89 searches the server authentication management DB 8006 (FIG. 9C) using a set of the access ID and the password received at S36 as a search key, to determine whether the same set of the access ID and the password have been registered. When there is the set of the access ID and the password in the server authentication management DB 8006, the authenticator 82 determines that the sharing assistant server 6 that has sent the request is an authorized entity. When there is no such set of the access ID and the password in the server authentication management DB 8006, the authenticator 82 determines that the sharing assistant server 6 that has sent the request is an unauthorized (illegitimate) entity. When it is determined that the sharing assistant server 6 is an illegitimate entity, the transmitter and receiver 81 sends to the sharing assistant server 6, a notification indicating the illegitimate entity. In the following, it is assumed that the sharing assistant server 6 is determined to be an authorized entity.

The storing and reading processor 89 of the schedule management server 8 identifies a scheduler based on the scheduler ID received at S36. The storing and reading processor 89 then searches the resource reservation management DB 8004 (FIG. 9A) managed by the identified scheduler, using the user ID received at S36 as a search key, to read resource reservation information corresponding to the user ID (S38). In this case, the storing and reading processor 89 reads the resource reservation information whose scheduled start date is today.

Further, the storing and reading processor 89 of the schedule management server 8 identifies a scheduler based on the scheduler ID received at S36. The storing and reading processor 89 then searches the event management DB 8005 (FIG. 9B) managed by the identified scheduler, using the user ID received at S36 as a search key, to read event schedule information corresponding to the user ID (S39). In this case, the storing and reading processor 89 reads the event schedule information whose scheduled start date and time is today. When the schedule management server 8 is located in a country or region having a time zone that differs from a time zone applied to the communication terminal such as the electronic whiteboard 2 or the like, the communication terminal adjusts the time zone according to a local time zone applicable to a place where the communication terminal is provided.

The transmitter and receiver 81 transmits, to the sharing assistant server 6, the resource reservation information obtained at S38 and the event schedule information obtained at S39 (S40). Accordingly, the transmitter and receiver 61 of the sharing assistant server 6 receives the resource reservation information and event schedule information.

Next, the generator 63 of the sharing assistant server 6 generates a reservation list based on the resource reservation information and the event schedule information received at S40 (S41). The transmitter and receiver 61 transmits reservation list information indicating the contents of the reservation list to the electronic whiteboard 2 (S42). The transmitter and receiver 21 of the electronic whiteboard 2 receives the reservation list information.

Next, the display control 24 of the electronic whiteboard 2 controls the display 220 to display a reservation list screen 250 as illustrated in FIG. 14 (S43). The reservation list screen 250 includes a display area 251 for displaying a resource name (in this case, a name of a conference room) and a display area 252 for displaying the current (today's) date. The reservation list screen 250 further includes event information 261, 261, 263, etc. each indicating an event in which the target resource (here, in this case, the conference room X) is used. Each item of event information includes a scheduled start time and a scheduled end time for using the target resource, an event name, and a name of a user who has reserved the target resource. Along with the event information 261, 262, and 263, corresponding start buttons 261s, 262s, and 263s are displayed, each of which is pressed by the user when an event is started.

For example, when the user A presses the start button 261s with the electronic pen 2500 or the like, the acceptance unit 22 accepts a selection of the event indicated by the event information 261 (S44). The transmitter and receiver 21 of the electronic whiteboard 2 transmits the event information for identifying the selected event to the sharing assistant server 6 (S45). The event information includes each item of data illustrated in FIG. 14, such as the resource name, scheduled start time and schedule end time of using the resource, event name, and name of the reservation holder. Accordingly, the transmitter and receiver 61 of the sharing assistant server 6 receives the event information.

Next, the storing and reading processor 69 of the sharing assistant server 6 stores the user ID and organization ID that are received at S33, the event information received at S45, and the user ID of each participant of the event, which is obtained from the resource reservation information received at S40 using the selected event information (S46).

As described above, for example, the user A starts an event (a meeting on a strategic plan) using the resource (the conference room X) and the communication terminal (the electronic whiteboard 2). Specifically, as illustrated in FIG. 15, the user A uses the electronic whiteboard 2 to carry out a meeting in the conference room X. The display control 24 displays, at an upper right portion of the display 220, the remaining time during which the resource can be used. In this embodiment, the display control 24 calculates a time period between the current time and the scheduled end time indicated by the event information selected at S44, and displays the calculated time period as the remaining time.

### <Processing to report availability>

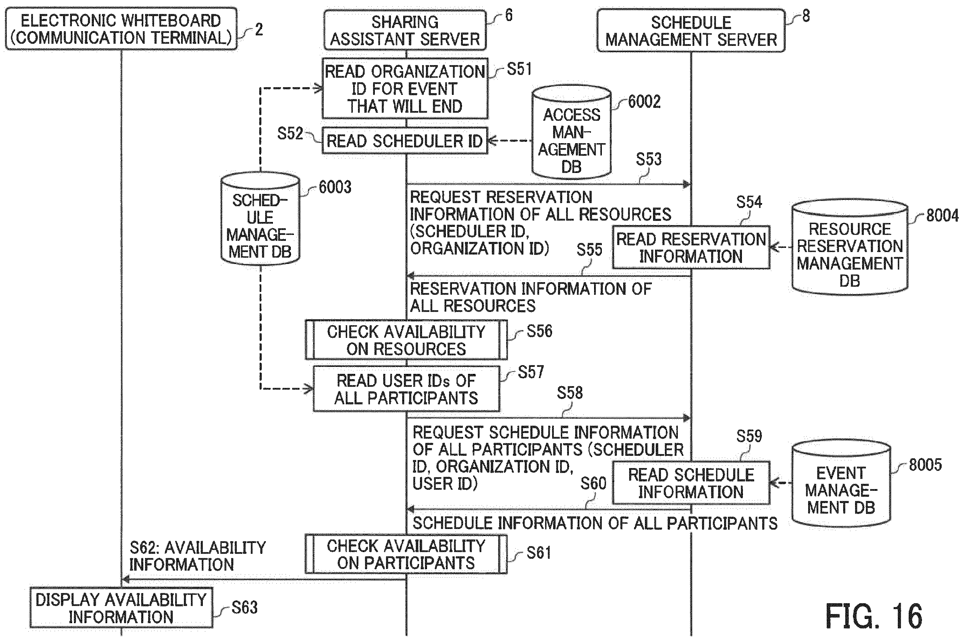

Referring to FIGs. 16 to 20, operation of transmitting information to the electronic whiteboard 2, performed by the sharing assistant server 6, at a predetermined time (for example, 5 minutes) before the scheduled end time, is described according to an embodiment. It is assumed that the sharing assistant server 6 reports on availability of the currently-used conference room (or another conference room) after the scheduled end time, and on availability of all participants that are participating (or assumed to be participating) in the currently-held meeting after the scheduled end time. That is, the sharing assistant server 6 sends information on availability of a space and a person, which may be used for determining whether to continue the currently-held meeting. More specifically, if the conference room and participants are available, the users at the meeting may determine to continue the currently-held meeting.

The sharing assistant server 6 keeps counting a time period, from the time when the user A has signed in at S31 of FIG. 13. When the current time reaches a predetermined time (for example, 5 minutes) before the scheduled end time of any one of the events managed by the schedule management DB 6003 (FIG. 7C), the storing and reading processor 69 of the sharing assistant server 6 reads, from the schedule management DB 6003, an organization ID of such event that is estimated to end in the predetermined time from the current time (S51).

Next, the storing and reading processor 69 of the sharing assistant server 6 searches the access management DB 6002 (FIG. 7B) using the organization ID read at S51 as a search key to obtain the scheduler ID that corresponds to the read organization ID (S52).

The transmitter and receiver 61 of the sharing assistant server 6 transmits, to the schedule management server 8, reservation request information indicating a request for today's reservation information of all resources, which are managed by the organization of the user who made a reservation of the event that is estimated to end in the predetermined time (S53). The reservation request information includes the scheduler ID read at S52 and the organization ID read at S51. Accordingly, the transmitter and receiver 81 of the schedule management server 8 receives the reservation request information. Additionally, the transmitter and receiver 61 of the sharing assistant server 6 may transmit, to the schedule management server 8, reservation request information indicating a request for today's reservation information of all resources, which are managed by an organization of any participant (excluding the resource itself) other than the user who made the reservation. For the descriptive purposes, in the following, it is assumed that the event started by the user A as described above referring to FIG. 13 has been detected as an event that will end in the predetermined time at S51.

The storing and reading processor 89 of the schedule management server 8 identifies a scheduler based on the scheduler ID received at S53. The storing and reading processor 89 then searches the resource reservation management DB 8004 (FIG. 9A) managed by the identified scheduler, using the organization ID received at S53 as a search key, to read reservation information reserved for the organization (S54). In this example, the storing and reading processor 89 reads reservation information of the current date for all conference rooms managed by the organization of the user who made the reservation. The transmitter and receiver 81 transmits, to the sharing assistant server 6, the reservation information obtained at S54 (S55). Accordingly, the transmitter and receiver 61 of the sharing assistant server 6 receives the reservation information of all conference rooms of the organization.

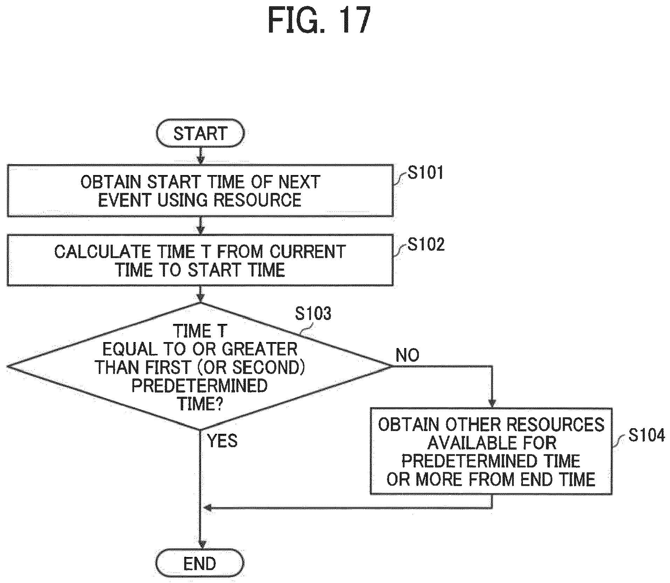

Next, the sharing assistant server 6 checks availability of the currently-used resource (for example, the conference room X) and other resources (for example, the conference room Y) (S56). Referring to FIG. 17, processing to check availability of the currently-used resource and other resources is described according to the embodiment. FIG. 17 is a flowchart illustrating a process of checking availability of the currently-used resource and other resources, according to the embodiment.

The extractor 64 extracts, from among all the reservation information received at S55, the next scheduled start time of the currently-used resource (for example, the conference room X) for today (S101). In this embodiment, it is assumed that the currently-held event is listed at top of the resource reservation management table illustrated in FIG. 9A. In such case, the extractor 64 extracts, as the start time of a next scheduled event, the value of time (10:00 in this case) from the scheduled start date and time in the second record from the top of the resource reservation management table illustrated in FIG. 9A.

Next, the calculator 65 calculates a time T, which is a time period from the current time to the scheduled start date and time of a next event for today (S102). Alternatively, the calculator 65 may calculate a time T, from any reference time that is set for a time period during when the current event is taking place (for example, a scheduled time period that can be defined by the scheduled start time and date and the scheduled end time and date), to the scheduled start time and date of a next event for today.

The determiner 66 determines whether or not the time T is equal to or greater than (or exceeds) a first predetermined time period (S103). The first predetermined time period may be set, for example, according to the preference of a system designer or a user. The first predetermined time period is set to, for example, 15 minutes. In such case, use of the resource may be extended up to, for example, 10 minutes. When the determiner 66 determines that the time T is equal to or greater than (or exceeds) the first predetermined time period ("YES" at S103), the processing of S56 ends to proceed to S57. When the determiner 66 determines that the time T is less than the first predetermined time period at S103 ("NO" at S103), the operation proceeds to S104. At S104, the extractor 64 further identifies at least one resource (in this example, the conference room Y) that is available for a predetermined time period or more (or exceeds the predetermined time period) from the scheduled end date and time of using the currently-used resource for the event. The processing of S56 then ends.

Since the operation of S104 is performed in a substantially similar manner as described above referring to S101 to S103 for the currently-used resource, details of processes are not illustrated in the flowchart.

For example, the processing of S104 is performed as follows. The extractor 64 extracts, from among all the reservation information received at S55, a scheduled start time of the event using another resource (for example, the conference room Y) for today, after the scheduled end time of the currently-held event. For example, referring to FIG. 9A, the extractor 64 extracts, as the start time of a scheduled event, the value of time from the scheduled start date and time in a record of the resource reservation management table illustrated in FIG. 9A for any event after the scheduled end date and time of the currently-held event.

The calculator 65 then calculates a time T, which is a time period from the current time to the scheduled start date and time of a next event using the another resource.

The determiner 66 determines whether or not the time T is equal to or greater than (or exceeds) a predetermined time period, in a substantially similar manner as described above referring to S103.

However, for the another resource, the determiner 66 determines whether the time T is equal to or greater than a second predetermined time period. The second predetermined time period may be set, for example, according to the preference of a system designer or a user. For example, the second predetermined time period may be set equal to the first predetermined time period, such as 15 minutes. Alternatively, the second predetermined time period may be set greater than the first predetermined time period, for example, 20 minutes in case the first predetermined time period is 15 minutes. In the case of using another resource, each participant has to move from the currently-used resource (the conference room X), such that the second predetermined time period may be set to 20 minutes, with 5 minutes added for a traveling time.

In one example, the above-described operation is repeated for all resources that can be obtained using the schedule management table of FIG. 7C. In such case, more than one another resource may be obtained. In another example, the above-described operation is repeated until there is at least one resource other than the currently-used resource.

Subsequently, referring back to FIG. 16, the storing and reading processor 69 of the sharing assistant server 6 reads user IDs of all participants who are participating in the currently-held event (the event that is supposed to end in the predetermined time as determined at S51) (S57). In this disclosure, the sharing assistant server 6 assumes that all participants, who have been registered, are actually participating in the event, even if there may be one or more participants who may not be actually participating the event. Next, the transmitter and receiver 61 of the sharing assistant server 6 transmits, to the schedule management server 8, schedule request information indicating a request for event schedule information of the current date for all participants participating in the currently-held event using the currently-used resource (the conference room X) (S58). The schedule request information includes the organization ID read at S51, the scheduler ID read at S52, and the user ID of each of all participants read at S57. Accordingly, the transmitter and receiver 81 of the schedule management server 8 receives the schedule request information.

Next, the storing and reading processor 89 of the schedule management server 8 reads out the requested event schedule information from the event management DB 8005 (S59). The transmitter and receiver 81 transmits, to the sharing assistant server 6, the event schedule information of the current date for all participants who are participating in the currently-held event using the currently-used resource (for example, the conference room X) (S60). Accordingly, the transmitter and receiver 61 of the sharing assistant server 6 receives the event schedule information.

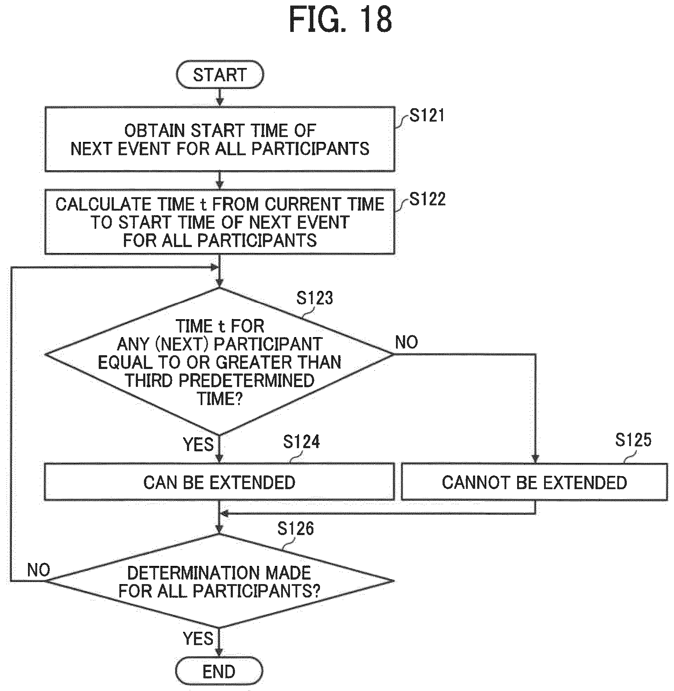

Next, the sharing assistant server 6 checks availability of all participants who are participating in the currently-held event, using the event schedule information (S61). Here, the user as the reservation holder is also treated as one participant. Referring to FIG. 18, processing to check availability of each user who is participating in the currently-held event, is described according to the embodiment. FIG. 18 is a flowchart illustrating a process of checking availability of each user who is participating in the currently-held event, according to the embodiment.

First, the extractor 64 extracts, from the event schedule information received at S60, the scheduled start time of each event (for example, a management meeting) that has been registered for each participant today, which is scheduled to start after the scheduled end time of the currently-held event (for example, a meeting on strategic plan) (S121).

Next, the calculator 65 calculates a time t, which is a time period from the current time to the scheduled start time of an event that each participant is scheduled to participate after the end of the currently-held event (S122). Here, the time t is obtained for each participant. The determiner 66 then selects an arbitrary one of the participants, and determines whether or not the time t calculated for that participant is equal to or greater than (or exceeds) a third predetermined time period (S123). The third predetermined time period may be set, for example, according to the preference of a system designer or a user. The third predetermined time is set to, for example, 15 minutes. When the determiner 66 determines that the time t is equal to or greater than (or exceeds) the third predetermined time period ("YES" at S124), the determiner 66 determines that the currently-held event can be extended for at least the participant that is selected for determination (S124). When the determiner 66 determines that the time t is less than the third predetermined time period ("NO" at S123), the determiner 66 determines that the currently-held event cannot be extended for at least the participant that is selected for determination (S125).

The processing proceeds to S126, after S124 or S125. At S125, the determiner 66 determines whether determination has been made for all participants. When the determiner 66 has not performed processing of S123 for all participants ("NO" at S126), the operation returns to S123 to make a determination of whether extension is possible for an unprocessed participant using the time t for that participant. More specifically, at S123, the determiner 66 selects a next participant to be processed. When the determiner 66 has performed processing of S123 for all participants ("YES" at S126), the processing of S61 ends.

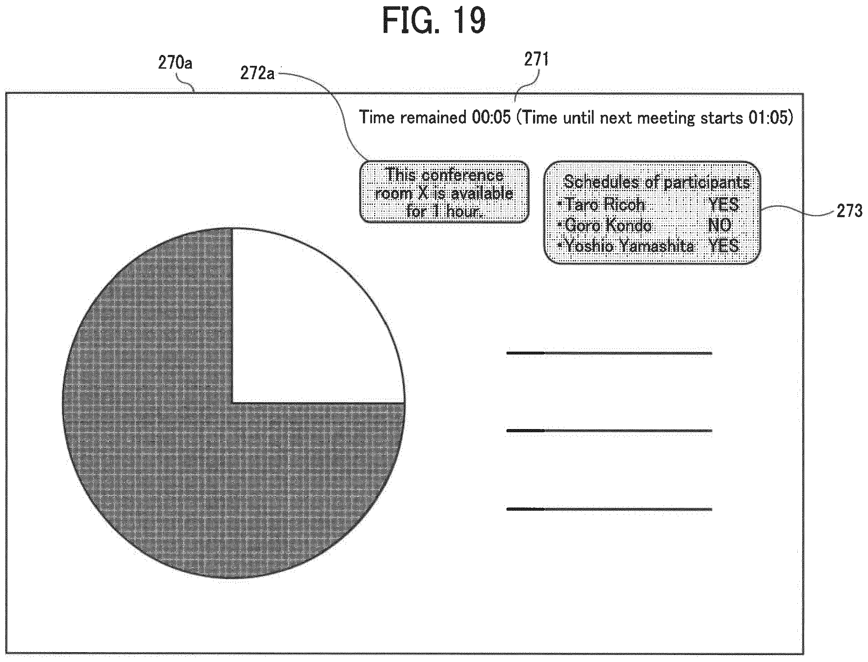

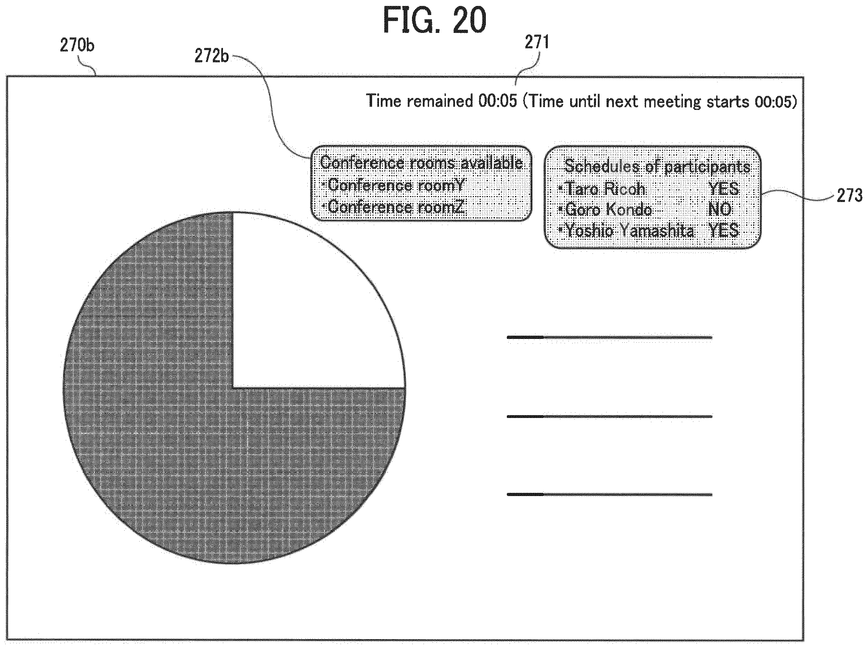

Referring back to FIG. 16, the transmitter and receiver 61 of the sharing assistant server 6 transmits information on availability to the electronic whiteboard 2 (S62). The information on availability includes information on availability of a resource, and information on availability of each participant (user), each of which is used to determine whether extension of the currently-held event is possible. Further, the information on availability of a resource includes information on availability of the currently-used resource to be used for determining whether to extend use of the currently-used resource, and information on availability of another resource (one or more other resources) other than the currently-used resource. The information on availability of each participant (user) indicates, for each participant, whether or not the participant is available to continue participation in the currently-held event even when extended. The information on availability of a resource includes the time T, which has been calculated at S102. This information may be used to generate information on the time remained as described below referring to FIGs. 19 and 20. The transmitter and receiver 21 of the electronic whiteboard 2 receives the information on availability.

FIGs. 19 and 20 are illustrations of example screens with information on availability, displayed by the electronic whiteboard 2. In the electronic whiteboard 2, after receiving the information on availability, the display control 24 displays a screen 270a as illustrated in FIG. 19 or a screen 270b as illustrated in FIG. 20. The screen 270a is an example screen to be displayed to notify the user that the currently-used resource (conference room) is available. The screen 270b is an example screen to be displayed to notify the user that the currently-used resource (conference room) has been reserved for another event, and that two other resources (conference rooms) are available. Any one of the screens 270a and 270b may be displayed with a screen for drawing an image.

The screen 270a of FIG. 19 includes a remaining time display area 271 for displaying the remaining time of the currently-held event (meeting), and a time until a next event (meeting) for the currently-held resource (conference room) starts. The screen 270a further includes extended use information 272a, as an example of information on availability of a currently-used resource. The extended use information 272a indicates information indicating that the use of the currently-used resource (in this case, the conference room X) can be extended, and information on a time that can be extended for use (in this case, one hour). The screen 270a further includes participant schedule list information 273. The participant schedule list information 273 includes, for each participant of the currently-held event (meeting), information indicating that the participant is available to participate the event after extended (in this case, "YES"), or information indicating that the participant is not available to participate the event after extended (in this case, "NO").

The screen 270b of FIG. 20 includes available resource information 272b, as an example of information on availability of another resource, in alternative to the extended use information 272a of FIG. 19. The available resource information 272b indicates one or more other resources (other than the conference room X) that can be used.

The screen 270a displays the time during when the currently-used resource can be used. Similarly, the screen 270b may display, for each resource that is available, a time during when such resource can be used. In such case, at S104, the calculator 65 calculates a time period during when each resource other than the currently-used resource is available.

Further, any one of the above-described information (the information on availability of a resource, another resource, and a participant) may be displayed in the form of icon, character, or a combination of icon and a character.

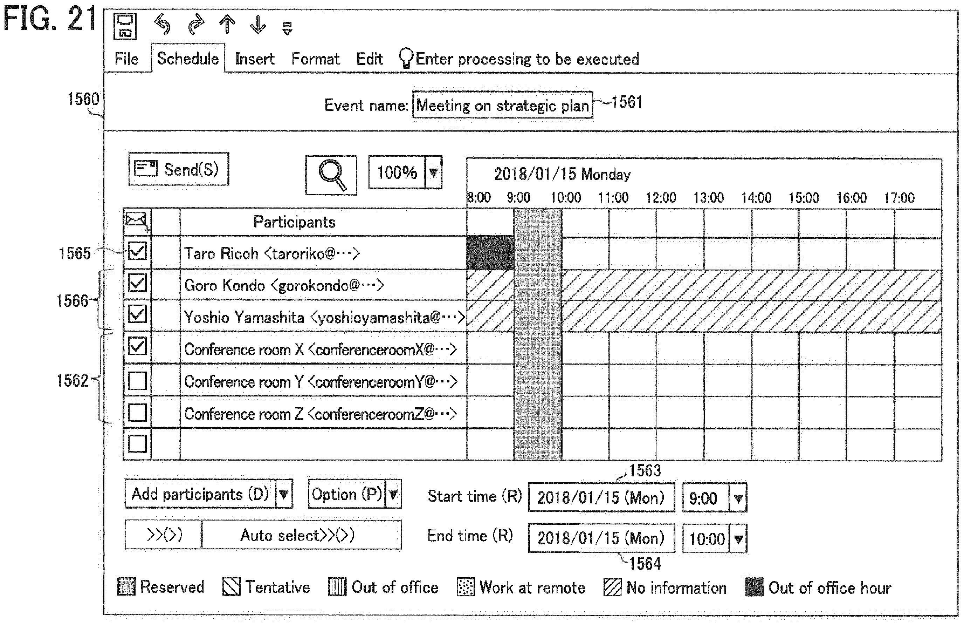

FIG. 21 illustrates a schedule input screen 1560, which is a modified example of the schedule input screen illustrated in FIG. 12. The schedule input screen 1560 of FIG. 21 allows the user, who is an organizer of the event, to adjust schedules, which may be displayed at the PC (for example, PC 5) operated by the user as the organizer.

The schedule input screen 1560 includes an entry field 1561 for an event name, an entry field 1562 for a resource ID or a resource name, and an entry field 1563 for a scheduled start date and time of the event (use of the resource), an entry field 1564 for a scheduled end date and time of the event (use of the resource), a display field 1565 for displaying a reservation holder (in this example, the user A) who is making a reservation, and a selection list 1566 for selecting names of one or more participants other than the reservation holder.

With the screen of FIG. 21, the organizer, the participants, and resources (such as the conference room) can be displayed at once.

According to one or more embodiments, the sharing assistant server 6 transmits, to the communication terminal (in this example, the electronic whiteboard 2) provided in the currently-used resource (in this example, the conference room X), information on availability of the currently-used resource that indicates whether use of the currently-used resource can be extended. As illustrated in FIG. 19, the communication terminal controls the display to display information indicating that use of the currently-used resource can be extended (in this case, the message "conference room is available"), and information on a time that can be extended for use (in this case, one hour), based on the information on availability of the currently-used resource that is received. With the above-described configuration, the user currently using the resource does not have to operate the PC 5 to access the schedule management server 8, to check if the currently-used resource is available to decide whether to extend the currently-held event (meeting). This simplifies the decision to be made by the user in extending the currently-held event.

Further, even when the currently-used resource has been reserved such that it is not available, the sharing assistant server 6 transmits, to the communication terminal, information indicating that another resource (for example, the conference rooms Y and Z) is available for use. As illustrated in FIG. 20, the communication terminal controls the display to display information on availability of another resource. With this configuration, the user who is currently using the resource, is able to decide whether the currently-held event (meeting) can be extended, using the another resource (another conference room) that is available.

Further, the sharing assistant server 6 transmits, to the communication terminal, information on availability of each participant (user) that indicates, for each participant, whether or not the participant is available to continue participation in the currently-held event even when extended. As illustrated in FIG. 19 and FIG. 20, the communication terminal controls the display to display, for each participant who is participating in the event, information indicating that the participant is available to participate the event after extended (in this case, "YES"), or information indicating that the participant is not available to participate the event after extended (in this case, "NO"). With this information, the user can easily decide whether to extend the currently-held event.

The above-described embodiments are illustrative and do not limit the present invention. Thus, numerous additional modifications and variations are possible in light of the above teachings. For example, the above-described embodiment described above referring to FIGs. 10 to 21 may be applicable to a case where the resource is other than the conference room.

Further, information on availability of a resource, another resource, or any user, may be output in various ways other than displaying. For example, the communication terminal may output such information in the form of voices.

Further, the illustrated apparatuses are only illustrative of one of several computing environments for implementing the embodiments disclosed herein. For example, in some embodiments, the sharing assistant server 6 includes a plurality of computing devices, e.g., a server cluster, that are configured to communicate with each other over any type of communications link, including a network, a shared memory, etc. to collectively perform the processes disclosed herein. Similarly, the schedule management server 8 can include a plurality of computing devices that are configured to communicate with each other.

Moreover, the sharing assistant server 6 and the schedule management server 8 can be configured to share the processing steps disclosed, e,g,, in Figure 16, in various combinations. For example, the processes S56 and S61 can be performed by the schedule management server 8. Further, the illustrated elements of the sharing assistant server 6 and the schedule management server 8 can be combined into a single server apparatus, or divided between a plurality of machines in combinations other than that shown in any of the above-described figures.

Further, some of the processes performed by the sharing assistant server 6 may be performed at the communication terminal. For example, the communication terminal may count a time period from the start of meeting, and transmit a request for reservation information and schedule information to the sharing assistant server 6.

The present invention can be implemented in any convenient form, for example using dedicated hardware, or a mixture of dedicated hardware and software. The present invention may be implemented as computer software implemented by one or more networked processing apparatuses. The processing apparatuses can comprise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

In one embodiment, the present invention may reside in a sharing assist server including means for calculating (65), before a scheduled end time for using a resource to be shared among a plurality of users, a first time period from a reference time for a scheduled use time of the resource, to a next scheduled start time of the resource. When the first time period calculated by the calculating means is equal to or greater than a first predetermined time period, transmitting means (61) transmits, to a communication terminal being used with the resource, information indicating that use of the resource is extendable.

In one embodiment, the calculating means calculates a second time period from the reference time, which is a current time, to a next scheduled start time of another resource different from the resource. When the second time period calculated by the calculating means is equal to or greater than a second predetermined time period, the transmitting means transmits, to the communication terminal, information indicating that the another resource is available for use.

In one embodiment, when the first time period is less than the first predetermined time period, the calculating means calculates the second time period.

In one embodiment, the calculating means calculates a third time period, from the current time, to a scheduled start time of a next event for each user using the resource. When there is any user, who has the calculated third time period that is equal to or greater than a third predetermined time period, the transmitting means transmits, to the communication terminal, information indicating that the user having that third predetermined time period can participate in the currently-held event when extended.

When there is any user, who has the calculated third time period that is less than the third predetermined time period, the transmitting means transmits, to the communication terminal, information indicating that the user having that third predetermined time period cannot participate in the currently-held even when executed.

In one embodiment, the sharing assist server includes means for receiving (61) reservation information including the scheduled start time for using the resource, from a schedule management server that manages the scheduled start time of the resource that has been reserved for use. The calculating means calculates the first time period from the current time to the next scheduled start time of the resource, which is included in the reservation information received by the receiving means.

In one embodiment, the sharing assist server includes means for receiving reservation information including the scheduled start time for using another resource, from a schedule management server that manages the scheduled start time of the another resource that has been reserved for use. The calculating means calculates the second time period from the current time to the next scheduled start time of the another resource, which is included in the reservation information received by the receiving means.

In one embodiment, the sharing assist server includes means for receiving schedule information including the scheduled start time of a next event for each user, from the schedule server that manages the scheduled start time of each event that each user will be participating. The calculating means calculates the third time period from the current time, to the scheduled start time of a next event of each user included in the schedule information received by the receiving means.

## Claims

1. A server apparatus (6) for assisting sharing of resources (X, Y, α) among a plurality of users, the server apparatus (6) comprising:
a calculator (65) configured to calculate, before an end time of a current scheduled time period for using a resource (X) is reached, a first time period, the first time period being a period of time from a reference time of the current scheduled time period for using the resource (X) to a start time of a next scheduled time period for using the resource (X); and
a transmitter (61) configured to, when the first time period is equal to or greater than a first predetermined time period, transmit to a communication terminal (2) used by a user who currently uses the resource (X), information indicating that the current scheduled time period for using the resource (X) is extendable.

2. The server apparatus (6) of claim 1, wherein:
the calculator (65) is configured to calculate a second time period, the second time period being a period of time from the reference time of the current scheduled time period for using the resource (X) to a start time of a scheduled time period for using another resource (Y), the another resource (Y) being one or more resources other than the resource (X) currently used; and
when the second time period is equal to or greater than a second predetermined time period, the transmitter (61) is configured to transmit, to the communication terminal (2), information indicating that the another resource (Y) is available for use after the end time of the current scheduled time period for using the resource (X) is reached.

3. The server apparatus (6) of claim 2,
wherein the calculator (65) calculates the second time period based on a determination that the first time period is less than the first predetermined time period.

4. The server apparatus (6) of any one of claims 1 to 3, wherein:
the calculator (65) is configured to calculate a third time period for each of one or more users who are assumed to participate in a current event using the resource (X), the third time period being a period of time from the reference time to a start time of a next scheduled event that the user is planning to participate; and
when any one of the third time periods calculated for the users is equal to or greater than a third predetermined time period, the transmitter (61) is configured to transmit, to the communication terminal (2), information indicating that the user, identified with the third time period that is equal to or greater than the third predetermined time period, is able to continue participating in the current event even when extended.

5. The server apparatus (6) of claim 4,
wherein, when any one of the third time periods calculated for the users is less than the third predetermined time period, the transmitter (61) is configured to transmit, to the communication terminal (2), information indicating that the user, identified with the third time period that is less than the third predetermined time period, is not able to continue participating in the current event when extended.

6. The server apparatus (6) of any one of claims 1 to 5, further comprising:
a receiver (61) configured to receive, from another server apparatus (8) storing reservation information on one or more resources, reservation information on the resource (X) that indicates start times of one or more scheduled time periods for using the resource (X),
wherein the calculator (65) obtains the start time of the next scheduled time period for using the resource (X), from the reservation information on the resource (X) that is received from the another server apparatus (8).

7. The server apparatus (6) of claim 2, further comprising:
a receiver (61) configured to receive, from the another server apparatus (8) storing reservation information on one or more resources, reservation information on the another resource (Y) that indicates start times of one or more scheduled time periods for using the another resource (Y),
wherein the calculator (65) obtains the start time of the scheduled time period for using the another resource (Y), from the reservation information on the another resource (Y) that is received from the another server apparatus (8).

8. The server apparatus (6) of claim 4, further comprising:
a receiver (61) configured to receive, from another server apparatus (8) storing schedule information on a plurality of users, schedule information on the one or more users who are assumed to participate in the current event using the resource (X),
wherein the calculator (65) obtains the start time of the next scheduled event that the user is planning to participate, from the schedule information on the one or more users that is received from the another server apparatus (8).

9. The server apparatus (6) of any one of claims 1 to 8, wherein the reference time is any point of time during when the current resource is being used in the current event.

10. A system (1) for assisting sharing of resources among a plurality of users, the system (1) comprising:
the server apparatus (6) of any one of claims 1 to 9; and
the communication terminal (2) connected to the server apparatus (6) via a network and configured to control a display to display screen data based on the information transmitted from the server apparatus (6).

11. The system (1) of claim 10, wherein:
the transmitter (61) of the server apparatus (6) further transmits, to the communication terminal (2), information on the first time period, when the first time period is equal to or greater than the first predetermined time period, and
the screen data includes a message indicating that use of the resource (X) is extendable, and information on how long the use of the resource (X) is extendable, based on the information transmitted from the server apparatus (6).

12. The system of claim 10 or 11, further comprising:
another apparatus (8) communicably connected with the server apparatus (6), including:
a memory (8000) that stores reservation information on one or more resources, including reservation information on the resource that indicates start times of one or more scheduled time periods for using the resource.

13. The system of claim 12,
wherein the memory (8000) further stores schedule information on a plurality of users, including schedule information on the one or more users who are assumed to participate in the current event using the resources.

14. A method for assisting sharing of resources among a plurality of users, performed by a server apparatus (6), the method comprising:
calculating (S102), before an end time of a current scheduled time period for using a resource (X) is reached, a first time period, the first time period being a period of time from a reference time of the current scheduled time period for using the resource (X) to a start time of a next scheduled time period for using the resource (X); and
transmitting (S62) information indicating that the current scheduled time period for using the resource (X) is extendable, to a communication terminal (2) used by a user who currently uses the resource (X), when the first time period is equal to or greater than a first predetermined time period.

15. A carrier means carrying computer readable code for controlling a computer system to carry out the method of claim 14.
